(19) **Europäisches Patentamt**
**European Patent Office**
**Office européen des brevets**

(11) **EP 2 688 126 A1**

(12) **EUROPEAN PATENT APPLICATION**

(43) Date of publication:
**22.01.2014 Bulletin 2014/04**

(21) Application number: **13175386.5**

(22) Date of filing: **05.07.2013**

(51) Int Cl.:
*H01M 4/38* (2006.01)     *H01M 4/58* (2010.01)
*H01M 10/052* (2010.01)   *H01M 10/0567* (2010.01)
*H01M 10/0568* (2010.01)  *H01M 10/0569* (2010.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.07.2012 US 201213550884**

(71) Applicant: **UChicago Argonne, LLC
Argonne, IL 60439 (US)**

(72) Inventors:
• **Belharouak, Ilias
Bolingbrook, IL 60490 (US)**
• **Xu, Rui
Westmont, IL 60559 (US)**

(74) Representative: **D'Arcy, Julia
Harrison IP
1st Floor
Box Tree House
Northminster Business Park
Northfield Lane
York, YO26 6QU (GB)**

(54) **Lithium-sulfur electrolytes and batteries**

(57)     An electrolyte includes a lithium polysulfide of formula $Li_2S_x$, where $x > 2$; a shuttle inhibitor; and a non-aqueous solvent. Lithium-sulfur batteries may incorporate such electrolytes.

EP 2 688 126 A1

**Description**

The United States Government has rights in this invention pursuant to Contract No. DE-AC02-06CH11357 between the U.S. Department of Energy and UChicago Argonne, LLC, representing Argonne National Laboratory.

**FIELD**

The present technology is generally related to lithium-sulfur batteries, their construction, and components.

**BACKGROUND**

Recently, lithium-sulfur batteries have drawn much attention and interest from researchers as one of the best candidate cathode materials for power sources. The theoretical capacity of a sulfur cathode is very high (1675 mAh/g) compared to lithium ion battery cathode materials (100-300 mAh/g). Furthermore, sulfur has several advantages as a cathode material due to its abundance, low cost, and environmental friendliness. In a lithium-sulfur battery, the positive electrode includes elemental sulfur, electronic conductors, and binders, while the negative electrode is lithium metal, and is separated from the positive electrode by a solid or non-aqueous liquid electrolyte.

At room temperature, a typical Li-S system discharge curve exhibits two plateaus. During the first discharge, molecules of elemental sulfur ($S_8$) accept electrons, generating a chain of lithium polysulfides ($Li_2S_x$). Usually polysulfides with x of approximately 4-8 are generated at the higher voltage plateau (2.3-2.4 V), and further polysulfide reduction takes place at the lower voltage plateau (about 2.1 V). It is believed that the lithium polysulfide in the electrolyte, generated from the charging and discharging of the cell, may reach a maximum about 0.001 M. Although lithium-sulfur batteries have many advantages, problems such as the utilization of sulfur in the cathode and the cyclic stability have hindered their widespread practical use. The insulating nature of sulfur and its final discharge products ($Li_2S_2$ and $Li_2S$) prevent full discharge of a Li-S battery with a large percentage of sulfur in the positive electrode. Therefore, the sulfur cathode must be well combined with huge quantities of electronic conducting agent. Carbon materials having different morphologies and structures are usually added as electronic conductors in the Li-S battery. Such carbon materials include bulk carbon, high surface area active carbon, nanostructured carbonaceous matrixes such as carbon nanotubes and mesoporous carbons. High carbon content improves conductivity, but at the expense of reduced energy density. Nanostructured and mesoporous carbon can establish more efficient electronic contact and improve the capacity of sulfur, but the synthesis methods of these carbons are very costly.

Another issue with Li-S battery technology arises from the polysulfide shuttle phenomenon, which decreases the active mass utilization in the discharge process, corrodes the lithium anode's surface, reduces the coulombic efficiency in the charge process, and causes capacity fading during cycling. The shuttle phenomenon is mainly due to the high solubility of the polysulfide anions formed as reaction intermediate products in both discharge and charge processes in the polar organic solvents used in electrolytes, and the reaction between dissolved polysulfides and the lithium anode. During cycling, the polysulfide anions migrate through the separator to the Li metal whereupon they are reduced to lower-order polysulfides. These species diffuse back to the sulfur electrode and are re-oxidized to higher-order polysulfides again, thus creating a shuttle mechanism. The use of absorbing agents in sulfur electrodes is an approach to relieve the dissolution of polysulfides. These absorbing agents include meso- and micro-porous carbon, active carbon and multiwalled carbon, aluminum oxide, magnesium and nickel oxide ($Mg_{0.6}Ni_{0.4}O$) and vanadium oxides. Different electrolyte solvents that can provide both good surroundings for the redox reaction and promptly formed passivation layer on the lithium anode have also been tried in Li-S batteries.

To protect the lithium anode from being corroded by reacting with the polysulfides and forming insoluble insulating layers of $Li_2S$ and $Li_2S_2$, additives to electrolyte that can suppress the shuttle phenomenon and protect lithium metal have also been investigated. While the additives may improve battery columbic efficiency, they do not solve the major problem of capacity fading.

**SUMMARY**

Provided herein are electrolytes for lithium-sulfur batteries which can achieve extremely high capacity, outstanding cycling stability, excellent rate capabilities, and near 100% columbic efficiency of the lithium-sulfur batteries. These electrolytes include both lithium polysulfide and shuttle inhibitors to prevent cathode active material loss and inhibit polysulfide shuttling mechanisms, thereby eliminating or minimizing the capacity fade and low efficiency problems plagued with conventional lithium-sulfur batteries. The sulfur electrolytes can be used alone without addition of electrolyte salts in lithium-sulfur batteries. The polysulfide electrolytes are economical and practical to produce, and they can work with sulfur electrodes in which sulfur was simply mixed with acetylene black and generate a high energy density battery.

In one aspect, an electrolyte is provided including a lithium polysulfide of formula $Li_2S_x$, where x > 2; a shuttle inhibitor; and a non-aqueous solvent, where the lithium polysulfide is present in the electrolyte at a concentration of about 0.01 M to about 3 M. In some embodiments, the non-aqueous solvent includes 1,2-dimethoxy ethane, 1,3-dioxolane, tetraethylene glycol dimethyl ether, tetrahydrofuran, or tri(ethylene glycol) dimethyl ether. The non-aqueous solvent may be a mixture of any two or more such solvents. In some embodiments, the non-aqueous solvent is a mixture of two solvents selected from 1,2-dimethoxy ethane, 1,3-dioxolane, tetraethyleneglycol dimethyl ether, tetrahydrofuran, and tri (ethylene glycol)dimethyl ether; in a v/v ratio of from 5:95 to 95:5. In some embodiments, the v/v ratio of the solvents is about 1:1. In some embodiments, the non-aqueous solvent include a mixture of 1,2-dimethoxy ethane and 1,3-dioxolane; 1,2-dimethoxy ethane and tetraethyleneglycol dimethyl ether; or 1,2-dimethoxy ethane and tri(ethylene glycol)dimethyl ether. In other embodiments, the non-aqueous solvent includes 1,2-dimethoxy ethane and 1,3-dioxolane in a v/v ratio of 1:1; or tetraethyleneglycol dimethyl ether.

In the electrolyte, x in the lithium polysulfide may be from 3 to 20. In some embodiments, x is 8 or 9.

In one embodiment of the electrolyte, x is from 3 to 15; the shuttle inhibitor includes $LiNO_3$ or $LiClO_4$; and the non-aqueous solvent includes 1,2-dimethoxy ethane, 1,3-dioxolane, tetraethyleneglycol dimethyl ether, tetrahydrofuran, or tri(ethylene glycol)dimethyl ether.

In one embodiment of the electrolyte, the concentration of the lithium polysulfide in the electrolyte is from about 0.1 M to about 0.3M. In any of the above embodiments, the electrolyte may be subject to the proviso that the electrolyte has not been subjected to a charging or discharging current.

In another aspect, a lithium-sulfur battery is provided, the battery including a sulfur cathode; a lithium metal anode; and an electrolyte; the electrolyte including a lithium polysulfide of formula $Li_2S_x$, where x > 2; a shuttle inhibitor; and a non-aqueous solvent. In some embodiments, the battery is uncharged (*i.e.* has never been charged). The non-aqueous solvent, shuttle inhibitor, and x may be as defined for any of the above electrolytes.

In some embodiments, the battery further includes a separator between the anode and the cathode. The separator may include a microporous polymer film that is nylon, cellulose, nitrocellulose, polysulfone, polyacrylonitrile, polyvinylidene fluoride, polypropylene, polyethylene, polybutene, or a blend or copolymer thereof. In some embodiments, the separator is an electron beam treated micro-porous polyolefin separator.

In another aspect, a process is provided for preparing an electrolyte, the process including contacting $Li_2S$ and S in a non-aqueous solvent to form a suspension; heating the suspension to a temperature and for a time sufficient to dissolve the $Li_2S$ and S in the solvent and form a lithium polysulfide solution; cooling the lithium polysulfide solution; and adding a shuttle inhibitor to the lithium polysulfide solution.

In another aspect, a process is provided for preparing an electrolyte, the process including contacting Li and S in a non-aqueous solvent to form a suspension; heating the suspension to a temperature and for a time sufficient to dissolve the Li and S in the solvent and form a lithium polysulfide solution; cooling the lithium polysulfide solution; and adding a shuttle inhibitor to the lithium polysulfide solution.

**BRIEF DESCRIPTION OF THE DRAWINGS**

FIGs. 1A, 1B, 1C, 1D, 1E, 1F, 1G, 1H and 1I illustrate the electrochemical properties of the lithium-sulfur battery using an electrolyte of 0.2M $Li_2S_9$ in DME with 0.5M of $LiNO_3$, according to Example 1.

FIG. 2A, 2B, and 2C illustrate the electrochemical properties of a lithium-sulfur battery using the electrolyte of 1M LiTFSI in DME:DOL=1:1 (v/v), according to Comparative Example 1.

FIG. 3A, 3B, and 3C illustrate the electrochemical properties of a lithium-sulfur battery using the electrolyte of 1M LiTFSI in TEGDME, according to Comparative Example 2.

FIG. 4A and 4B illustrate the electrochemical properties of a lithium-sulfur battery using the electrolyte of 1M LiTFSI in TEGDME with 0.5M $LiNO_3$, according to Comparative Example 3.

FIG. 5A, 5B, 5C, and 5D illustrate the electrochemical properties of a lithium-sulfur battery using the electrolyte of 1M LiTFSI in DME:DOL=1:1 (v/v) with 0.5M $LiNO_3$, according to Comparative Example 4.

FIG. 6A and 6B illustrate the electrochemical properties of a lithium-sulfur battery using the electrolyte of 0.5M $LiNO_3$ in DME, according to Comparative Example 5.

FIG. 7 illustrates the charge/discharge curves for a lithium-sulfur battery using the electrolyte of 0.2M $Li_2S_9$ in DME , according to Comparative Example 6.

FIG. 8A, 8B, and 8C illustrate the electrochemical properties of a lithium-sulfur battery using the electrolyte of 0.2M $Li_2S_9$ and 1M LiTFSI in TEGDME, according to Comparative Example 7.

FIG. 9A, 9B, and 9C illustrate the electrochemical properties of a lithium-sulfur battery using the electrolyte of 0.1M $Li_2S_9$ in DME with 0.5M $LiNO_3$, according to Example 2.

FIG. 10A, 10B, and 10C illustrate the electrochemical properties of a lithium-sulfur battery using the electrolyte of 0.2M $Li_2S_9$ in DME with 1M $LiNO_3$, according to Example 3.

FIG. 11A, 11B, and 11C illustrate the electrochemical properties of a lithium-sulfur battery using the electrolyte of 0.2M $Li_2S_9$ in DME with 0.5M $LiNO_3$, according to Example 4.

FIG. 12A, 12B, and 12C illustrate the electrochemical properties of a lithium-sulfur battery using the electrolyte of 0.5M $Li_2S_9$ in DME with 0.5M $LiNO_3$, according to Example 5.

FIG. 13A, 13B, and 13C illustrate the electrochemical properties of a lithium-sulfur battery using the electrolyte of 0.2M $Li_2S_8$ in DME with 0.5M $LiNO_3$, according to Example 6.

FIG. 14A, 14B, and 14C illustrate the electrochemical properties of a lithium-sulfur battery using the electrolyte of 0.2M $Li_2S_9$ in DME:DOL (1:1 v/v) with 0.5M $LiNO_3$, according to Example 7.

FIG. 15A, 15B, and 15C illustrate the electrochemical properties of a lithium-sulfur battery using the electrolyte of 0.2M $Li_2S_9$ in DME:DOL (1:1 v/v) with 0.5M $LiNO_3$, according to Example 8.

FIG. 16A, 16B, and 16C illustrate the electrochemical properties of a lithium-sulfur battery using the electrolyte of 0.2M $Li_2S_9$ in TEGDME with 0.5M $LiNO_3$, according to Example 9.

FIG. 17A, 17B, and 17C illustrate the electrochemical properties of a lithium-sulfur battery using the electrolyte of 0.2M $Li_2S_9$ in TEGDME with 0.5M $LiNO_3$, according to Example 10.

FIG. 18A, 18B, and 18C illustrate the electrochemical properties of a lithium-sulfur battery using the electrolyte of 0.2M $Li_2S_9$ in DME with 0.5M $LiNO_3$, according to Example 11.

## DETAILED DESCRIPTION

Various embodiments are described hereinafter. It should be noted that the specific embodiments are not intended as an exhaustive description or as a limitation to the broader aspects discussed herein. One aspect described in conjunction with a  particular embodiment is not necessarily limited to that embodiment and can be practiced with any other embodiment(s).

In one aspect, electrolytes are provided for use in lithium-sulfur batteries. The electrolytes include lithium polysulfides and shuttle inhibitor materials. The lithium polysulfides function not only as lithium ionic conductors, but also as contributors to the overall capacity of the battery. It has been found that by changing the dissolution equilibrium between electrolyte and electrode, the local dissolution of lithium polysulfides from the cathode may be minimized, thereby decreasing the migration of these species into the electrolyte. This will reduce the active material loss from the cathode. While the pre-dissolved lithium polysulfides in the electrolyte can reduce the active material loss from the cathode, the shuttle inhibitor is also present in the electrolyte to prevent shuttling within the cell due to the high polysulfide concentration. The shuttle inhibitors also perform a secondary role as anode protection additives by forming a passivation layer on the surface of the lithium metal anode. The shuttle inhibitor/adode protector may include lithium salts, other salts that contain an N-O bond, and such materials are important to the battery's columbic efficiency. The shuttle inhibitors/ anode protectors assist in forming a dense passivation layer on the surface of the anode, thereby inhibiting further reaction between the polysulfides and lithium metal.

Accordingly, in one aspect, an electrolyte is provided, the electrolyte including a lithium polysulfide of formula $Li_2S_x$, where x > 2; a shuttle inhibitor; and a non-aqueous solvent. While in another aspect, a process for preparing the electrolyte is provided. The process includes contacting a $Li_2S$ and S (or Li and S) in a non-aqueous solvent to form a suspension and heating the suspension to a temperature and for a time sufficient to dissolve the $Li_2S$ and S (or Li and S) in the solvent and form a lithium polysulfide solution. A shuttle inhibitor may then be added to the lithium polysulfide solution, either before or after cooling of the solution, or the shuttle inhibitor may be added to the non-aqueous solvent prior to forming the suspension. The shuttle inhibitor may be added as a solid to the polysulfide solution or it may be added as stock solution of the shuttle inhibitor in the solvent.

The lithium polysulfides ($Li_2S_x$, where x is greater than 2) are prepared by weighing an appropriate stoichiometric amount of $Li_2S$ and S and contacting them together in the solvent. In the lithium polysulfide, x may be from 3 to 20 according to  some embodiments. In other embodiments, x is from 4 to 10. In yet other embodiments, x is 8 or 9. After stirring at elevated temperature for a sufficient period of time, the $Li_2S$ and the S dissolve into the solvent. The resulting solution is typically dark yellow, dark brown, or dark red, and the color is dependent upon the ratio of $Li_2S$ to S, and the concentration of the $Li_2S_x$ in the solvent. As an alternative to the above, instead of a mixture of $Li_2S$ and S, the objectives may also be achieved with Li and S.

The concentration of the lithium polysulfide in the solvent may be from 0.01 M to 3 M. In some embodiments, the concentration of the lithium polysulfide in the solvent is from 0.01 M to 1 M. In some embodiments, the concentration of the lithium polysulfide in the solvent is from 0.01 M to 0.5 M. In other embodiments, the concentration of the lithium polysulfide in the solvent is from 0.1 M to 0.3 M. In yet other embodiments, the concentration of the lithium polysulfide in the solvent may be about 0.2 M. The elevated temperature at which the dissolution is performed is somewhat dependent upon the solvent being used, but may be from about 30°C to about 120°C. In some embodiments, the temperature is from about 50°C to about 100°C. In some embodiments, the temperature is from about 50°C to about 75°C. In yet other embodiments, the temperature is about 60°C. The period of time to dissolution may vary with the particulate size of the materials to be dissolved, the solvent, and the temperature. The time may be from about 1 minute to 100 hours. In some embodiments, the time is about 2 hours to about 24 hours.

The sulfur content in lithium polysulfides may vary according to the binary system "n S + m Li$_2$S", where n + m = 1, and 0<n<1 and 0<m<1. Alternatively, the sulfur content in lithium polysulfides may vary according to the binary system "n S + m Li", where n + m = 1, and 0<n<1 and 0<m<1. As an ionic conducting agent, these lithium polysulfides can totally replace the commonly used lithium salts, such as Li[N(CF$_3$SO$_2$)$_2$] (LiTFSI) and LiCF$_3$SO$_3$ (LiTF). More importantly, by changing the dissolution equilibrium between the electrolyte and electrode, the local dissolution of lithium polysulfides from the cathode decreases, and as well as the migration into the anode through the electrolyte is decreased. As a result, the loss of active material from the cathode is greatly reduced. What is more, these polysulfides contain sulfur and they are electrochemically active and hence can contribute to the battery capacity. While the pre-dissolved lithium polysulfides in the electrolyte can reduce the active material loss from the cathode, it should work with a shuttle inhibitor/anode protector in the electrolyte, or else the shuttle phenomenon would increase in the Li-S battery because of the high polysulfides concentration.

Illustrative electrolyte solvents include, but are not limited to, acetals, ketals, sulfones, acyclic ethers, cyclic ethers, glymes, polyethers, dioxolanes, substituted forms of the foregoing, and blends or mixtures of any two or more such solvents. Examples of acyclic ethers that may be used include, but are not limited to, diethyl ether, dipropyl ether, dibutyl ether, dimethoxymethane, trimethoxymethane, dimethoxyethane, diethoxyethane, 1,2-dimethoxypropane, and 1,3-dimethoxypropane. Examples of cyclic ethers that may be used include, but are not limited to, tetrahydrofuran, tetrahydropyran, 2-methyltetrahydrofuran, 1,4-dioxane, 1,3-dioxolane, and trioxane. Examples of polyethers that may be used include, but are not limited to, diethylene glylcol dimethyl ether (diglyme), triethylene glycol dimethyl ether (triglyme), tetraethylene glycol dimethyl ether (tetraglyme), higher glymes, ethylene glycol divinylether, diethylene glycol divinylether, triethylene glycol divinylether, dipropylene glycol dimethylether, and butylene glycol ethers. Examples of sulfones that may be used include, but are not limited to, sulfolane, 3-methyl sulfolane, and 3-sulfolene.

In some embodiments, the electrolyte solvent includes, but is not limited to, 1,2-dimethoxy ethane (DME), 1,3-dioxolane (DOL), tetraethyleneglycol dimethyl ether (TEGDME), tetrahydrofuran (THF), and tri(ethylene glycol)dimethyl ether. Mixtures of any two or more such solvents may also be used. For example, a mixture of DME:DOL is illustrated in the examples, but other mixtures may be used. Where a mixture of two of the solvents is used, the ratio of mixing may be from 1 to 99 of a first solvent and from 99 to 1 of a second solvent. In some embodiments, the ratio of the first solvent to the second solvent is from 10:90 to 90:10. In some embodiments, the ratio of the first solvent to the second solvent is from 20:80 to 80:20. In some embodiments, the ratio of the first solvent to the second solvent is from 30:70 to 70:30. In some embodiments, the ratio of the first solvent to the second solvent is from 40:60 to 70:40. In some embodiments, the ratio of the first solvent to the second solvent is about 1:1. For example, as illustrated in the examples, one mixture is that of DME:DOL at a ratio of about 1:1.

The shuttle inhibitor should have a proper degree of oxidizing ability. For example, salts containing N-O bond work well as shuttle inhibitors in Li/S batteries. In any of the above embodiments, the shuttle inhibitor includes oxidative additives, such as LiClO$_4$ and salts with ionic N-O bonds. Illustrative shuttle inhibitors include, but are not limited to, lithium nitrate, lithium nitrite, potassium nitrate, potassium nitrite, cesium nitrate, cesium nitrite, barium nitrate, barium nitrite, ammonium nitrate, ammonium nitrite, dialkyl imidazolium nitrates, guanidine nitrate, ethyl nitrite, propyl nitrite, butyl nitrite, pentyl nitrite octyl nitrite, nitromethane, nitropropane, nitrobutanes, nitrobenzene, dinitrobenzene, nitrotoluene, dinitrotoluene, nitropyridine, dinitropyridine, pyridine N-oxide, alkylpyridine N-oxides, and tetramethyl piperidine N-oxyl (TEMPO). The concentration of the shuttle inhibitor in the electrolyte is from about 0.01 M to about 2 M. In some embodiments, the concentration of the shuttle inhibitor in the electrolyte is from about 0.1 M to about 2 M. In some embodiments, the concentration is from about 0.2 M to about 1M.

Illustrative shuttle inhibitors/anode protectors include, but are not limited to, LiNO$_3$ and LiClO$_4$. The shuttle inhibitor/anode protector may also be a mixture of any two or more such materials. In one embodiment, the shuttle inhibitor is LiNO$_3$. In preparing the electrolyte, the shuttle inhibitor salts are weighed and dissolved in the lithium polysulfide solution. The salts are both ionic conductors and lithium anode protectors. The salts assist in the formation of a dense protective passive film on the surface of the anode which benefits the transfer of lithium ions and plays a role in preventing the reaction between polysulfides and the lithium anode.

Without being bound by theory, the following possible explanation is provided as a mechanism by which the polysulfide electrolyte may improve the capacity, cycling stability and coulombic efficiency of Li-S batteries. The capacity fading of lithium-sulfur batteries may be caused by the progression of the following three steps. First, lithium polysulfide species dissolve from the cathode surface into the electrolytes, although they may be trapped within the pores of the conductive agents in the cathode. Second, the locally dissolved polysulfides migrate away from the conductive agents in cathode to the bulk electrolyte due to the concentration gradient. As the lithium polysulfide moves away from the cathode, the battery capacity begins to fade due to the fact that only a portion of the dissolved lithium polysulfides is involved in the charge/discharge electrochemical process. Finally, during the charging process, the dissolved polysulfides in the bulk electrolyte that are in contact with the anode can react with Li$^+$ ions according to equation 1:

$$(x-y) \, Li_2S_x \ + \ 2 \, yLi^+ \ + \ 2 \, ye^- \ \rightarrow \ xLi_2S_{x-y}$$

In equation 1, x is greater than 2, y is greater than 0, but less than x. During this process, polysulfides are reduced at the anode to form lower-order polysulfides, which may move back to the cathode where they are re-oxidized to higher-order polysulfides. This is the shuttle mechanism, introduced above, which leads to the low coulombic efficiency in Li-S batteries. When low-order polysulfides are reduced at the anode and produce insoluble $Li_2S_2$ and $Li_2S$, these materials precipitate at the surface of the lithium anode. In this way, not only is the active material (*i.e.* sulfur) permanently lost from the cathode, but also the reactivity of the lithium metal is decreased. Furthermore, as the polysulfides turn into an insoluble precipitate, the polysulfide concentration in the electrolyte decreases, thereby leading to further dissolution and migration of lithium polysulfides from the cathode, and causing more loss of the active material. Thus, the continuous reaction between an unprotected lithium anode the dissolved polysulfides is a significant reason for capacity fade and low efficiency in Li-S batteries.

In the present electrolytes, lithium polysulfides are pre-dissolved into the electrolyte, which assists in leveling the concentration gradient such that when lithium polysulfides are produced at the cathode, they do not readily migrate away from the cathode. Further, the concentration of the pre-dissolved lithium polysulfides in the electrolyte is high enough to move the equilibrium backward and a part of the pre-dissolved lithium polysulfides can be involved in the charge and discharge process. In this way the electrolyte can also contribute to the capacity of the whole battery. If there is no shuttle inhibitor/anode protecting additive in the electrolyte, the pre-dissolved polysulfides can react with $Li^+$ ions at the anode surface, and be reduced to lower-order polysulfides leading to the shuttle mechanism. Thus, it is important to have an oxidizing shuttle inhibitor/anode protecting additive in the electrolyte that can work along with the predissolved lithium polysulfides to prevent the shuttle reaction. It is the combination of the pre-dissolved lithium polysulfides and the oxidizing shuttle inhibitor/anode protecting additives that provide for the prevention or minimization of cathode active material loss, and inhibition of the polysulfide shuttle. Accordingly, lithium-sulfur batteries having extremely high capacity, outstanding cycling stability, excellent rate capabilities and 100% columbic efficiency may be achieved.

In any of the above electrolytes, the electrolyte may be one that has not been subjected to a charging or discharge current. Accordingly, the only source of the lithium polysulfide is that which is added to the electrolyte.

In another aspect, a lithium-sulfur battery is provided. The battery includes a sulfur-based cathode; a lithium metal anode; and any of the above electrolytes. In some embodiments, the battery is uncharged. In other embodiments, the sole source of lithium polysulfide in the electrolyte of the battery is that formed by the reaction of $Li_2S$ and S as described above.

The cathode of the lithium-sulfur battery is a sulfur-based electrode. Thus, the cathode contains sulfur. The sulfur may be elemental and provide as such, or it may be combined with another conductive material such a carbon material. Illustrative carbon materials that may be mixed with the sulfur include, but are not limited to, synthetic graphite, natural graphite, amorphous carbon, hard carbon, soft carbon, acetylene black, mesocarbon microbeads (MCMB), carbon black, Ketjen black, mesoporous carbon, porous carbon matrix, carbon nanotube, carbon nanofiber, or graphene.

The cathode may be prepared by mixing the sulfur with the carbon material and a binding agent in the presence of a solvent to form a slurry. The binding agent may be a fluoro-resin powder such as gelatine, polytetrafluoroethylene (PTFE), polyvinylidene fluoride (PVDF), polyethylenetetrafluoroethylene (ETFE), polyamides, polyimides, or mixtures of any two or more such resins. The solvent may be N-methylpyrrolidone, acetone, water, or the like. The cathode may be prepared by coating and drying the mixture of the sulfur, carbon material, and binding agent directly on a current collector, or by casting the mixture on a separate support to form a film and then laminating the film on a current collector.

According to some embodiments, the current collector may include copper, stainless steel, titanium, tantalum, platinum, gold, aluminum, nickel, cobalt nickel alloy, highly alloyed ferritic stainless steel containing molybdenum and chromium; or nickel-, chromium-, or molybdenum- containing alloys. The current collector is a foil, mesh, or screen and the cathode active material is contacted with the current collector by casting, pressing, or rolling the mixture thereto.

The battery may also include a separator between the anode and the cathode to prevent shorting of the cell. Suitable separators include those such as, but not limited to, microporous polymer films, glass fibers, paper fibers, and ceramic materials. Illustrative microporous polymer films include, but are not limited, nylon, cellulose, nitrocellulose, polysulfone, polyacrylonitrile, polyvinylidene fluoride, polypropylene, polyethylene, polybutene, or a blend or copolymer thereof. In some embodiments, the separator is an electron beam treated micro-porous polyolefin separator. In some embodiments, the separator is a shut-down separator. Other separators may include a microporous xerogel layer, for example, a microporous pseudo-boehmite layer as described in U.S. Pat. No. 6,153,337. Commercially available separators include those such as, but not limited to, Celgard® 2025 and 3501, and 2325; and Tonen Setela® E25, E20, and Asahi Kasei® and Ube® separators.

The separator may be provided either as a free standing film or by a direct coating application on one of the electrodes. The electrolyte and structure of the present invention may be added to the separator during cell assembly or incorporated in a coating process.

Separators of a wide range of thickness may be used. For example, the separator may be from about 5 $\mu$m to about 50 $\mu$m thick. In other embodiments, the separator is from about 5 $\mu$m to about 25 $\mu$m.

The present invention, thus generally described, will be understood more readily by reference to the following examples, which are provided by way of illustration and are not intended to be limiting of the present invention.

**EXAMPLES**

**General Procedures**. The preparations of novel polysulfide electrolytes are detailed in the examples below. Generally, lithium polysulfides ($Li_2S_x$, x>2) are prepared by weighing appropriate stoichiometric amounts of $Li_2S$ and S, and/or Li and S and putting them together in the solvent. After stirring at 60°C for an appropriate time, $Li_2S$ and S, and/or Li and S dissolve in the solvent. The resulting solution is typically dark yellow, dark brown, or dark red, according to the ratio between $Li_2S$ and S, and/or Li and S and the concentration of the $Li_2S_x$ in the solution. Typically, the concentration of the lithium polysulfide in the solvent can be 0.01M or even lower, or 0.5M and higher. The sulfur content in lithium polysulfides ($Li_2S_x$, x>2) may vary according to the binary system "n S + m $Li_2S$" or "n S + m Li," where n + m = 1, and 0<n<1 and 0<m<1. The shuttle inhibitor/anode protective additives are also weighed and dissolved in the lithium polysulfide solution.

The examples are displayed in the following order: First, the example of a lithium-sulfur battery using the electrolyte of 0.2M $Li_2S_9$ in DME with 0.5M of $LiNO_3$ is shown to demonstrate the high capacity, excellent cyclic stability and nearly 100% coulombic efficiency that can be achieved because of the novel polysulfide electrolytes. Then, for comparison purpose, the examples of the batteries using other electrolytes are displayed (Comparative Examples 1 to 7). Theses examples show that without the use of the novel sulfur electrolytes and anode protecting additives in the electrolyte, such as $LiNO_3$, it is very difficult for a lithium-sulfur battery to achieve both high capacity and good cycling stability. The state of art in lithium-sulfur batteries is represented by the results provided in the Comparative Examples 1 through 7. Examples 1 to 11 show the properties of batteries using novel polysulfide electrolytes with different orders of lithium polysulfides (x varies in $Li_2S_x$), different oxidizing shuttle inhibitor/anode protective additives, different solvents and salt concentrations in the electrolytes. All of the batteries in Examples 1 to 11 show outstanding capacity, cyclic stability and coulombic efficiency. Batteries that only comprise carbon in the cathode and do not comprise any sulfur as the active material are also displayed in these examples to show the electrochemical activity of the sulfur electrolyte in a lithium-sulfur battery.

**Example 1**. $Li_2S$ (0.0373 g) and S (0.2048 g) were dissolved in dimethoxyethane (DME; 4 ml) with stirring at 60°C for 8 hours. The resulting solution was dark red. $LiNO_3$ (0.138 g) was then added to the solution to form a polysulfide electrolyte.

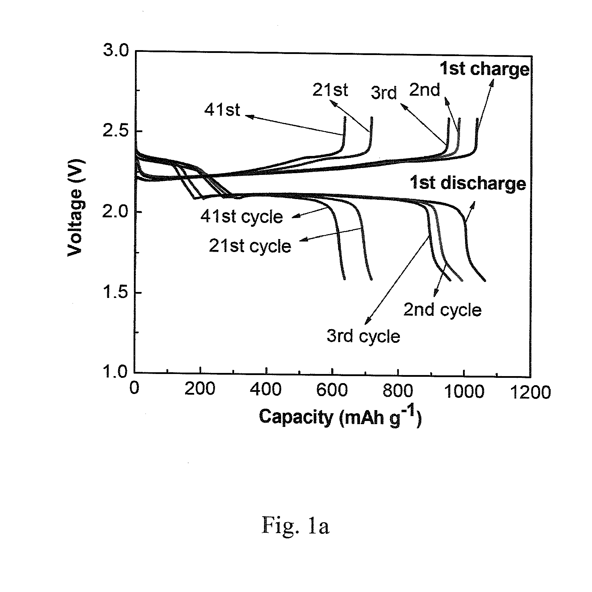

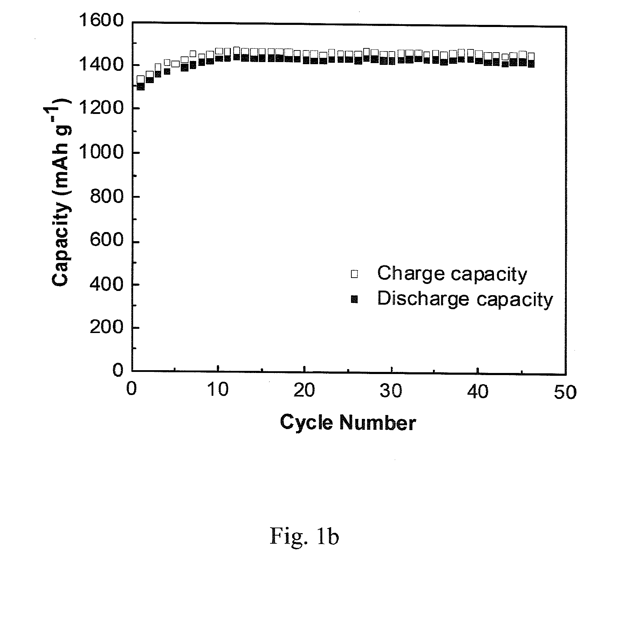

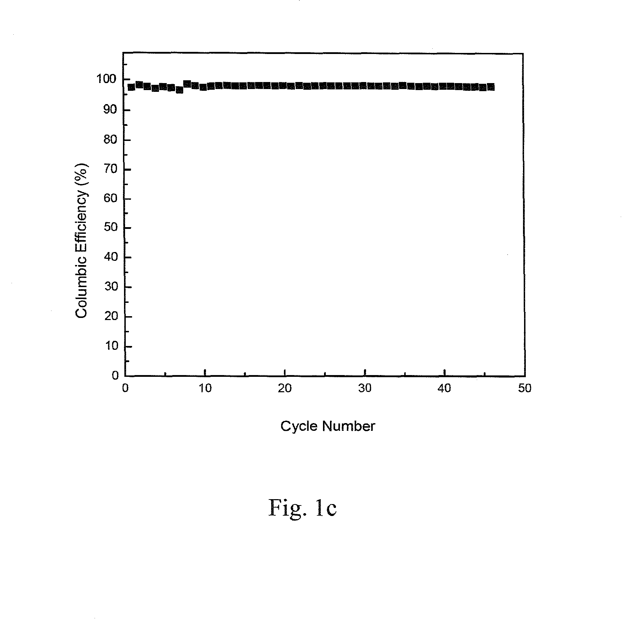

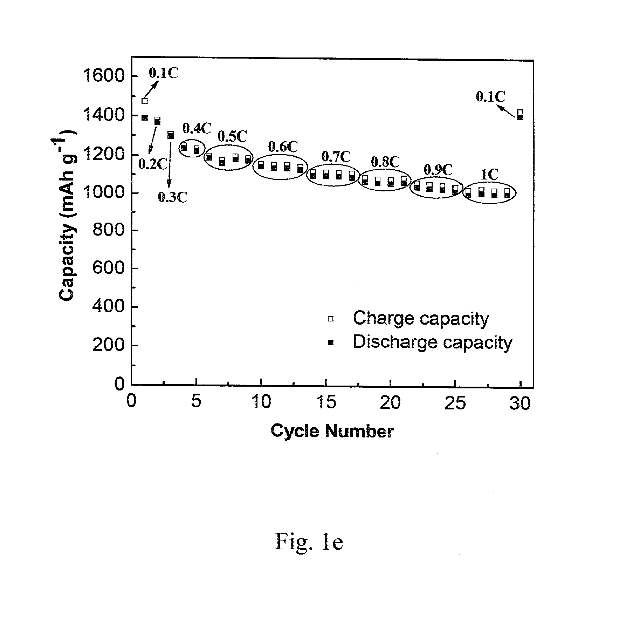

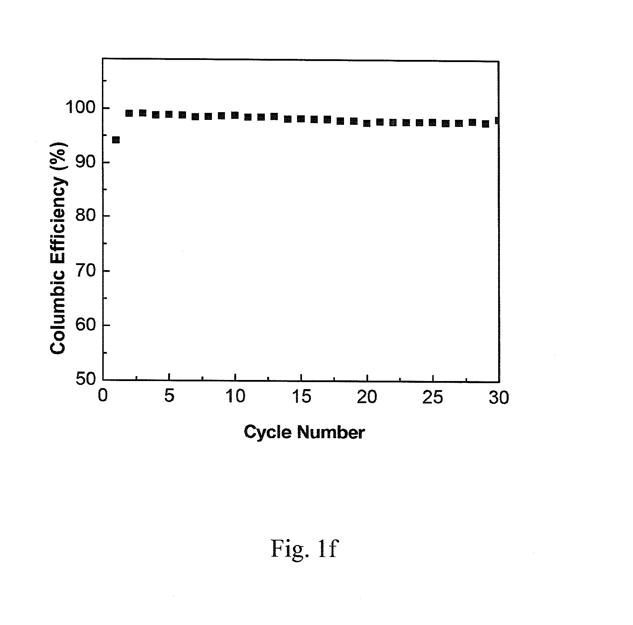

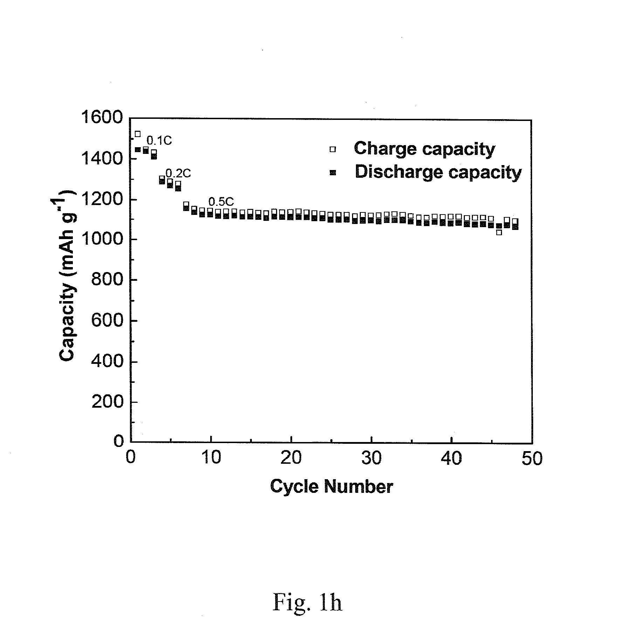

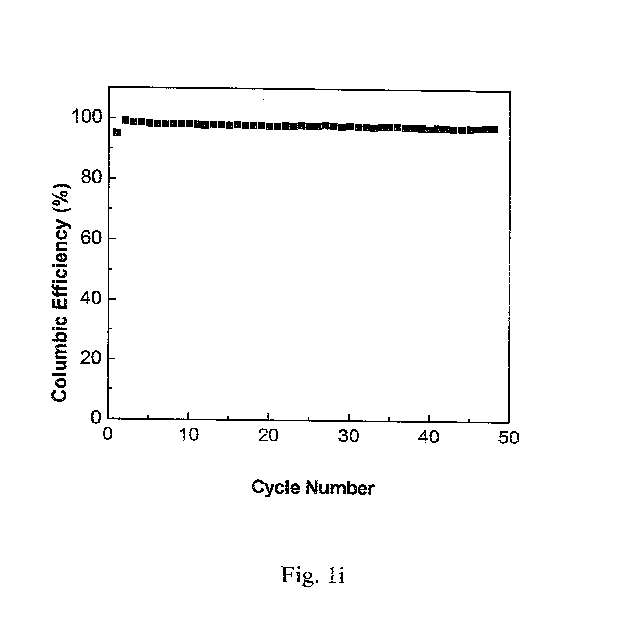

A coin battery was then prepared using the polysulfide electrolyte. The cathode of the coin battery was sulfur/acetylene carbon/PVDF in a ratio of 54/36/10. PVDF is polyvinylidenedifluoride. The anode of the coin battery was a lithium metal foil. The battery was tested using constant current charge/discharge between 1.6 V and 2.6 V. FIG. 1A is a graph of the charge/discharge curves of the battery over 45 cycles, and FIG. 1B is a graph of the cyclic stability of the battery under 160 mA/g (which corresponds to approximately a C/10 charge/discharge rate). FIG. 1C illustrates the coulombic efficiency of the same battery used for FIGs. 1A and 1B. The first cycle exhibited an efficiency of approximately 1300 mAh/g, while subsequent cycles exhibited an efficiency of 1400 mAh/g. The cell showed no capacity fade.

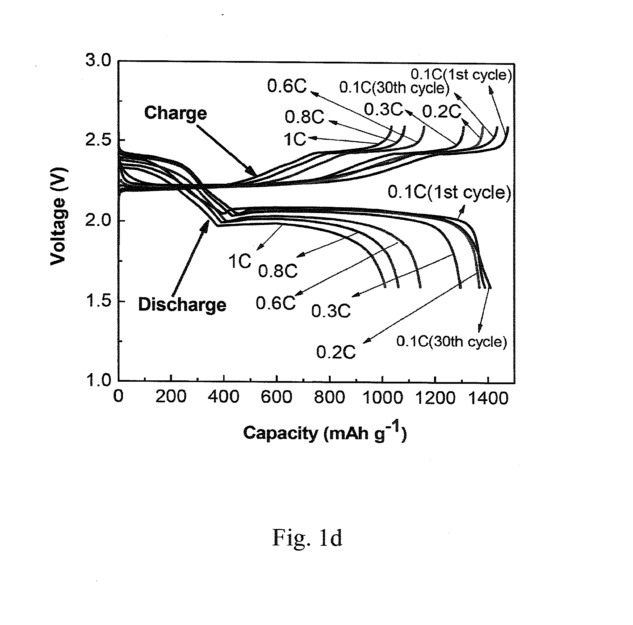

The capacity of the cell was calculated based on the active material's weight in the cathode, i.e., the sulfur content in the cathode. The coulombic efficiency of the cell was 98%. A new coin cell with the same composition was tested under different discharge rates from 0.1C to 1C and then back to 0.1C. The rate capabilities and coulombic efficiencies are shown in FIGs. 1D (charge/discharge capacity curves), 1E (rate capability from 0.1C to 1C and back to 0.1C), and 1F (charge/discharge coulombic efficiency of the same cell). At 1C discharge rate, the cell exhibits a 1000 mAh/g capacity. Under testing of the cell 0.1C rate, after the high rate tests, the 1400 mAh/g capacity is recovered.

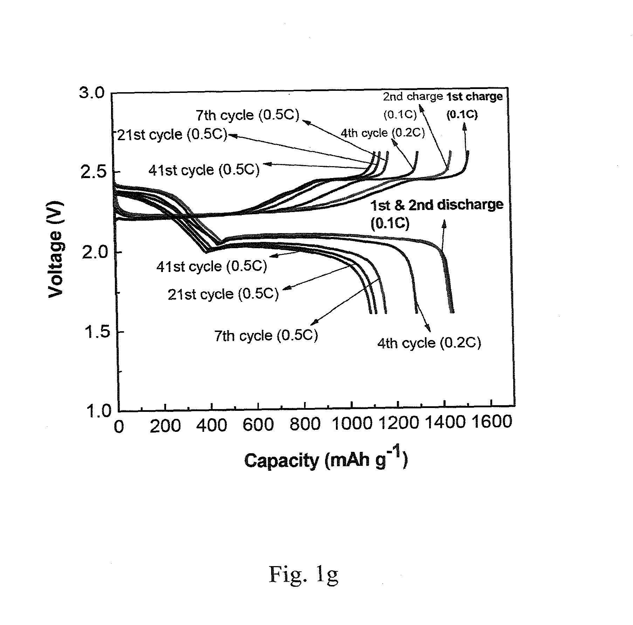

A second cell was prepared to illustrate the cycling stability of the polysulfide electrolyte under high rate (0.5C discharge rate), in FIGs. 1G (charge/discharge capacity curves), 1H (capacity cycling stability), and 1I (charge/discharge capacity curves). The cell exhibited a capacity of 1100 mAh/g for the remainder of cycles.

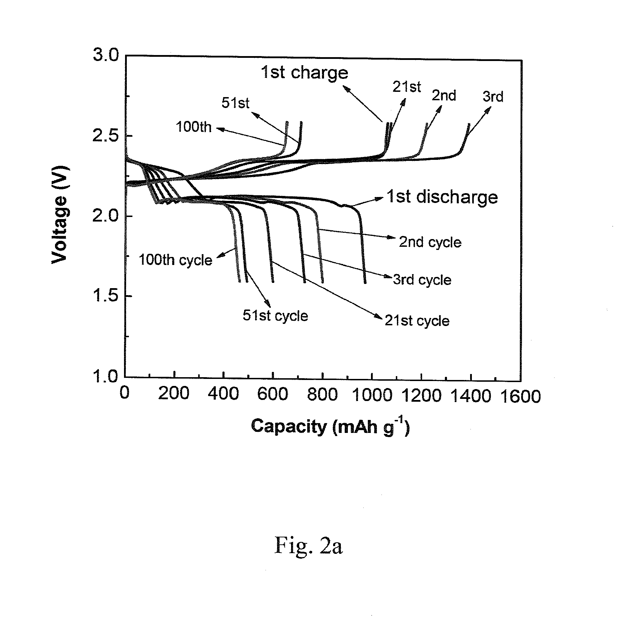

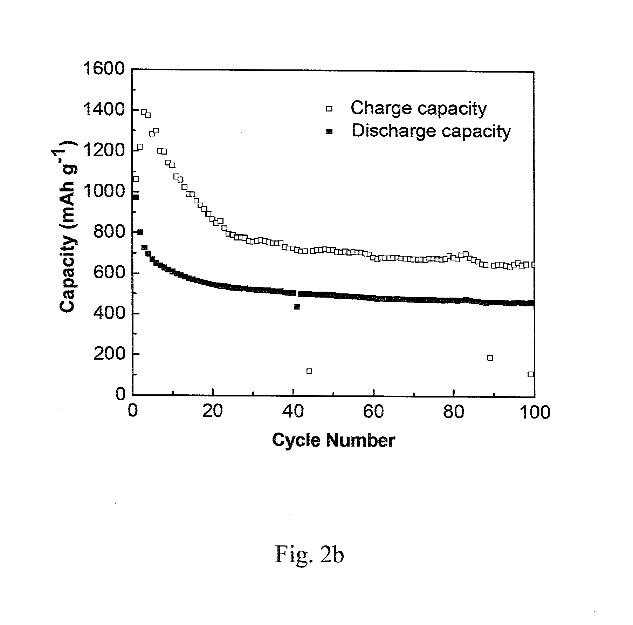

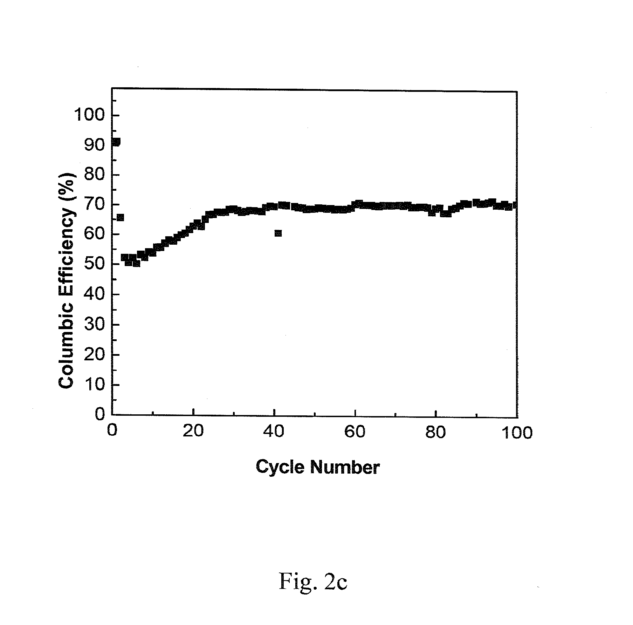

**Comparative example 1**. For comparison, a lithium-sulfur coin battery using an electrolyte of 1M LiTFSI (lithium trifluoromethanesulfonamide) in DME:DOL (1:1 (v/v); DOL is dioxolane) was prepared. The cathode and anode were as used in Example 1. The battery was subject to cycling at a test current of 160 mA/g, and a charge/discharge voltage window between 1.6 and 2.6 V. FIGs. 2A and 2B show the charge/discharge curves and capacity cycling stability during 100 cycles of the lithium-sulfur battery. FIG. 2C shows the charge/discharge coulombic efficiency of the coin cell during 100 cycles. FIGs. 2A-C illustrate that the cell had an initial discharge capacity of 1000 mAh/g, but quickly faded to 600 mAh/g after a few cycles. The coulombic efficiency of the cell was only around 70% percent. LiTFSI salt and DME/DOE solvents are conventional components in the state of art lithium-sulfur batteries.

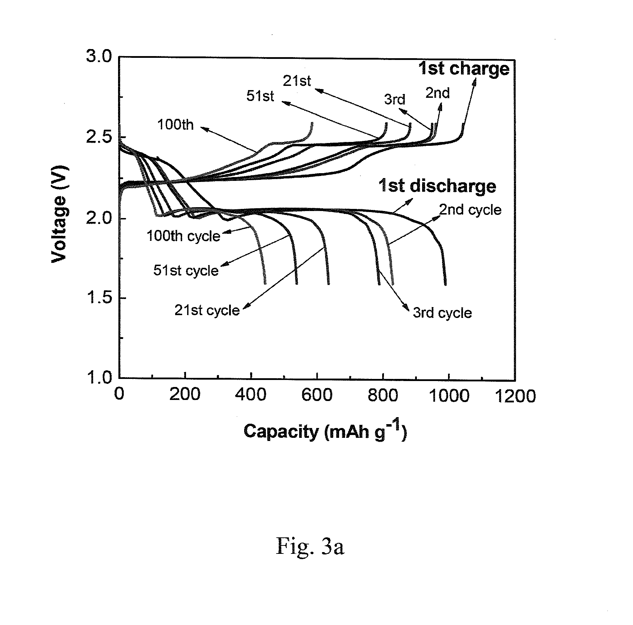

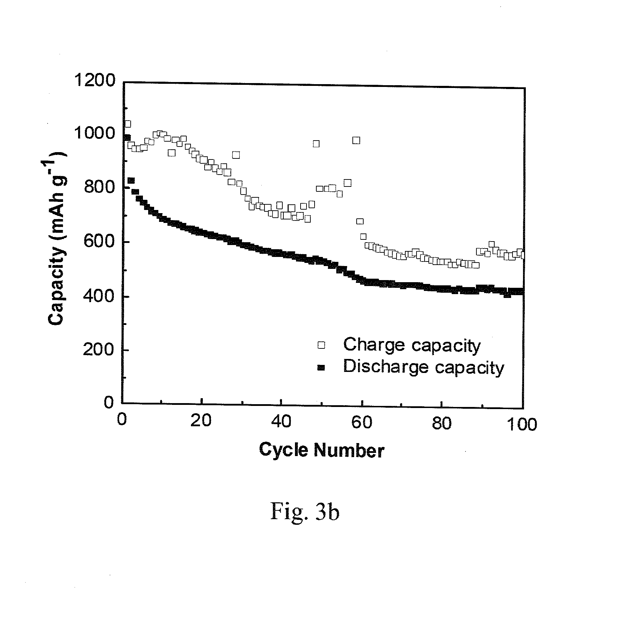

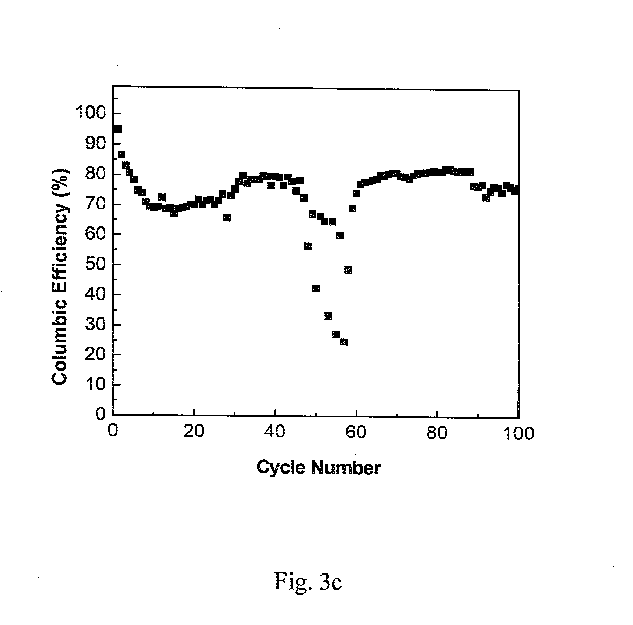

**Comparative example 2.** A lithium-sulfur coin cell battery was prepared with an electrolyte of 1M LiTFSI in tetraethyleneglycol dimethylether (TEGDME). The cathode and anode were as used in Example 1. The battery was subject to cycling at a test current of 160 mA/g, and a charge/discharge voltage window between 1.6 and 2.6 V. FIGs. 3A and 3B illustrate the charge/discharge curves and capacity cycling stability, respectively, during 100 cycles of the lithium-sulfur battery. FIG. 3C shows the charge/discharge coulombic efficiency of the coin cell during the 100 cycles. FIGs. 3A-C shows that the capacity of the cell faded very quickly, with an initial discharge capacity of around 1000 mAh/g, but only 450 mAh/g after 100 cycles. The coulombic efficiency of the cell was around 70-80% percent. LiTFSI salt and TEGDME solvent are conventional components in the state of art lithium-sulfur batteries.

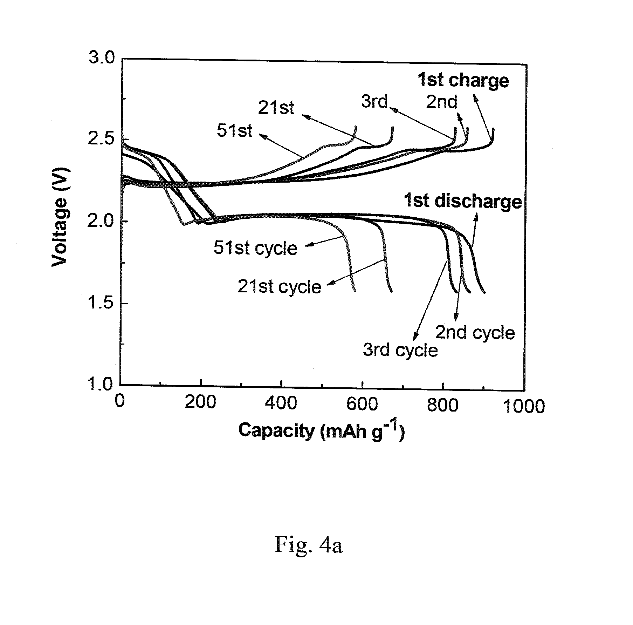

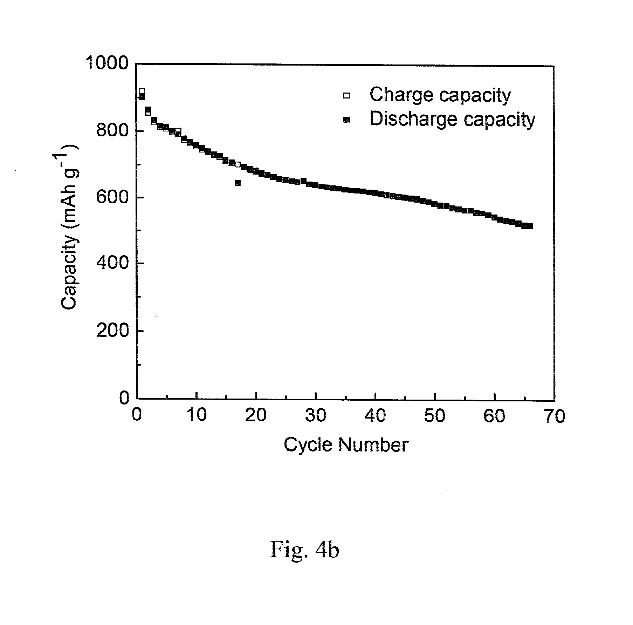

**Comparative example 3.** To demonstrate that in order to achieve both high capacity and high coulombic efficiency, a lithium polysulfide and shuttle inhibitor/anode protecting additive are both key components to lithium-sulfur electrolytes, electrolytes with only one of the necessary components were used to prepare coin cells. The electrolyte used in this example was 1M LiTFSI in TEGDME with 0.5M of $LiNO_3$. The cathode and anode were as used in Example 1. The battery was subject to cycling at a test current of 160 mA/g, and a charge/discharge voltage window between 1.6 and 2.6 V. FIGs. 4A and 4B shows the charge/discharge curves and capacity cycling stability, respectively, during 65 cycles of the lithium-sulfur battery. FIGs. 4A and 4B show that although the coulombic efficient of the cell was nearly 100%, the capacity of the cell faded very quickly, from 900 mAh/g in the first cycle down to below 600 mAh/g after 50 cycles. This example clearly shows that without addition of lithium polysulfides in the electrolyte, the capacity would still fade.

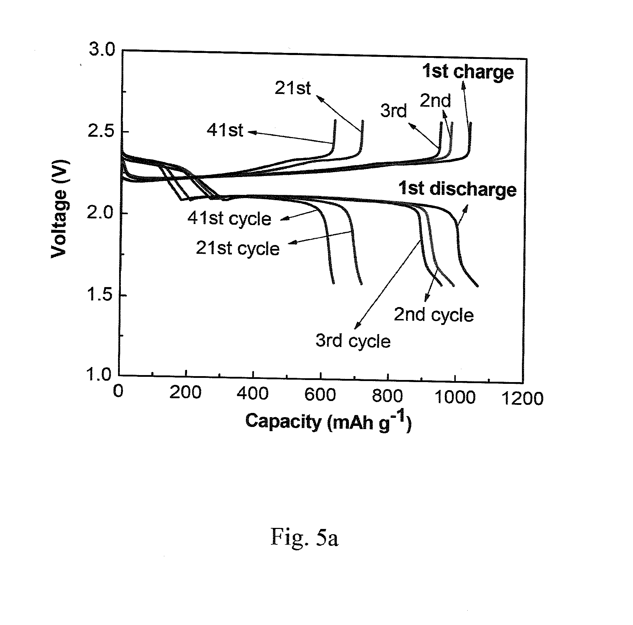

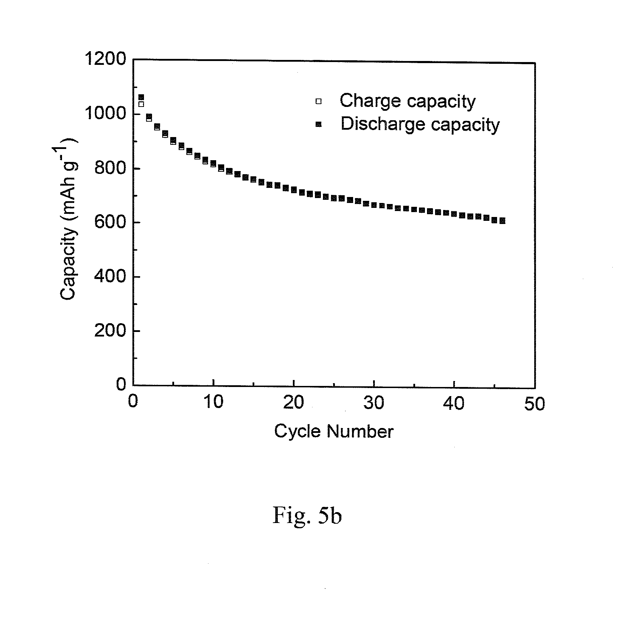

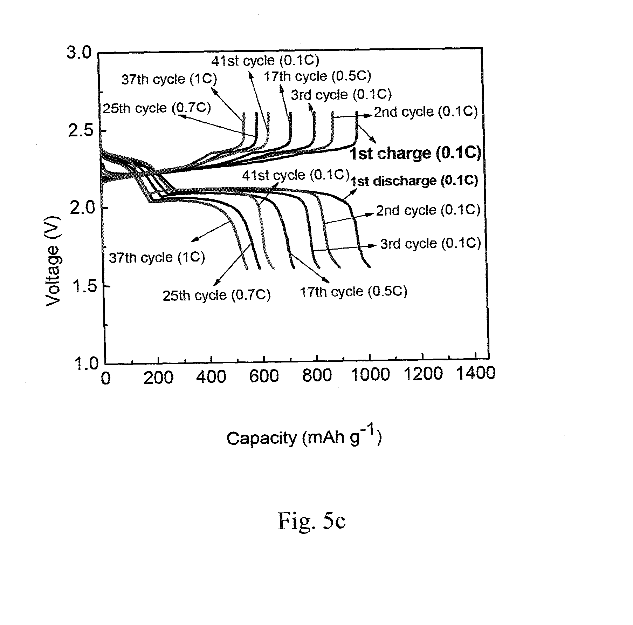

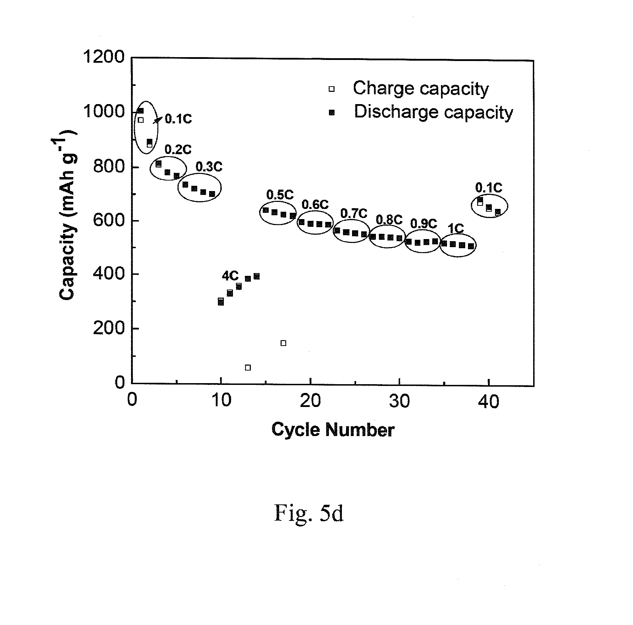

**Comparative example 4**. The electrolyte used in this example was 1M LiTFSI in DME:DOL=1:1 (v/v) with 0.5M of $LiNO_3$. The cathode and anode were as used in Example 1. The battery was subject to cycling at a test current of 160 mA/g, and a charge/discharge voltage window between 1.6 and 2.6 V. FIGs. 5A and 5B show the charge/discharge curves and capacity cycling stability, respectively, over 45 cycles of the battery at a charge/discharge rate of about C/10. FIGs. 5C and 5D shows same data for a new coin cell with the same composition from 0.1C to 1C and back to 0.1C.

FIG. 5B shows that the capacity of this cell faded very quickly, from around 1050 mAh/g in the first cycle down to around 600 mAh/g after 50 cycles. FIGs. 5C and 5D illustrate a coin cell with the same composition tested under 0.1C to 1C discharge rates and then back to 0.1C. The initial discharge capacity at 0.1C was 1000 mAh/g, but at the 1C rate the capacity was only 500 mAh/g. When the discharge current was put back to 0.1C, the capacity did not recover and was only 650 mAh/g. Therefore, one can conclude that without the appropriate use of sulfur electrolytes the addition of lithium nitrate can fix the problem of efficiency but cannot remedy the poor cycling of lithium-sulfur batteries. Comparative Example 4 corroborates results of Comparative Example 3.

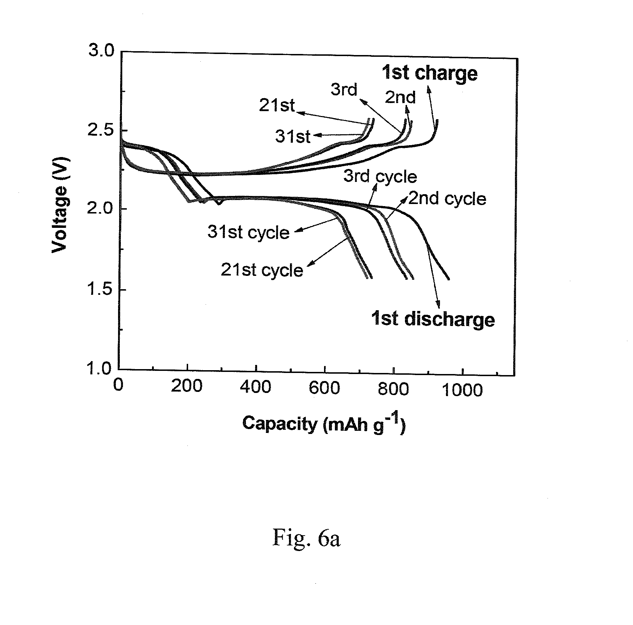

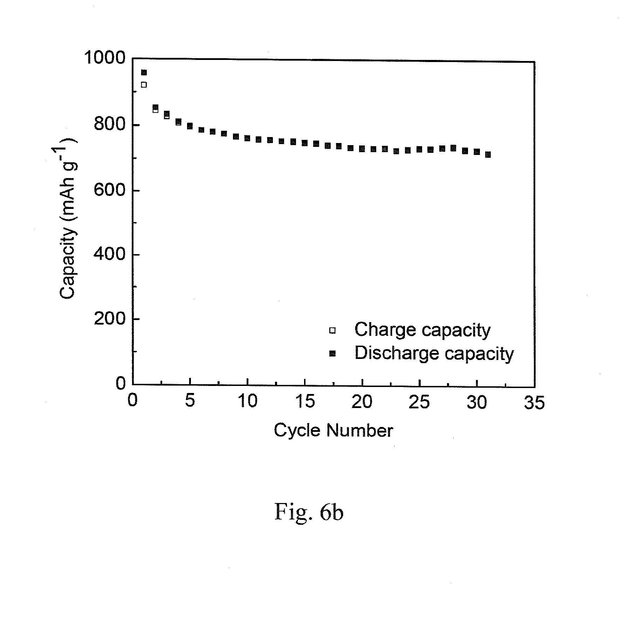

**Comparative example 5**. In this example, the electrolyte used was 0.5M $LiNO_3$ in DME. The cathode and anode were as used in Example 1. The battery was subject to cycling at a test current of 160 mA/g, and a charge/discharge voltage window between 1.6 and 2.6 V. FIG. 6 shows the charge/discharge curves (6A) and capacity cycling stability during 30 cycles (6B) of the lithium-sulfur battery. FIG. 6 shows that the initial discharge capacity of this cell was around 950 mAh/g, and after 30 cycles the capacity faded to 720 mAh/g. Comparative Example 5 corroborates results of Comparative Examples 3 and 4.

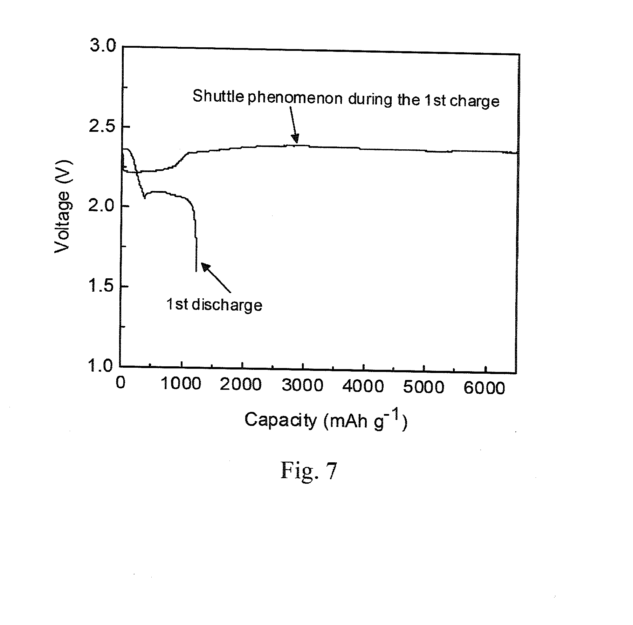

**Comparative example 6**. This example is to demonstrate the shuttle phenomenon if only polysulfides are used in lithium-sulfur batteries. 0.2 M $Li_2S_9$ in DME was prepared by dissolving $Li_2S$ (0.028 g) and S (0.154 g) in DME (3 ml) solvent. The cathode and anode were as used in Example 1. The battery was subject to cycling at a test current of 160 mA/g, and a charge/discharge voltage window between 1.6 and 2.6 V. FIG. 7 shows the first cycle charge/discharge curves for this cell, from which it can be seen the battery's charging voltage remained constant at 2.38V, indicating the initiation of the polysulfide shuttle phenomenon instead of the completion of the electrochemical charge. This example demonstrates that without using shuttle inhibitor/anode protective additive along with pre-dissolved lithium polysulfides in the electrolyte, the cell cannot work because of the consumption of the polysulfide species during the shuttle reaction in the first charge.

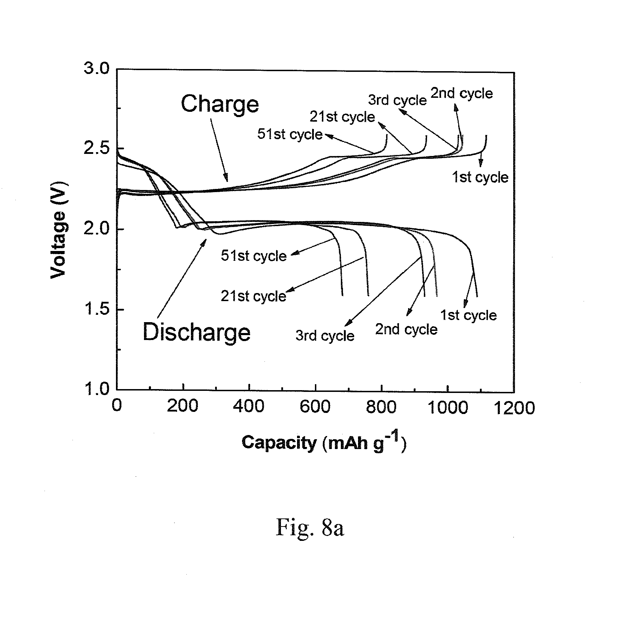

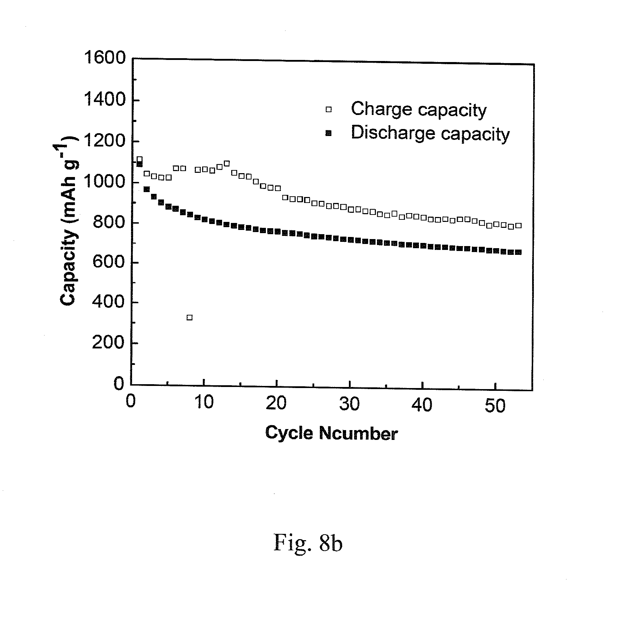

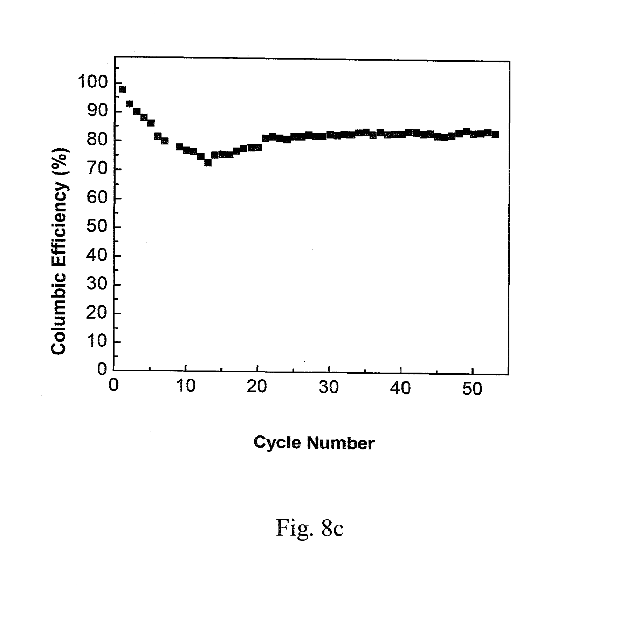

**Comparative example 7.** Electrolyte containing polysulfides and LiTFSI salt in the solvent was tested in this example. $Li_2S$ (0.0373 g) and S (0.2048 g) was dissolved in 4 mol of 1M LiTFSI in TEGDME. The cathode and anode were as used in Example 1. The battery was subject to cycling at a test current of 160 mA/g, and a charge/discharge voltage window between 1.6 and 2.6 V. FIGs. 8A and 8B show the charge/discharge curves and capacity cycling stability, respectively, during 50 cycles of the lithium-sulfur battery. FIG. 8C shows the charge/discharge coulombic efficiency of the same coin cell. FIGs. 8A-8C show that the capacity of the cell faded very quickly, from around 1100 mAh/g in the first discharge down to around 700 mAh/g after 40 cycles. The coulombic efficiency of the cell was around 80%. This example demonstrates that alone, the LiTFSI salt does not work as a shuttle inhibitor/anode protector.

The state of art in lithium-sulfur batteries is represented by the results provided in the Comparative Examples 1 through 7.

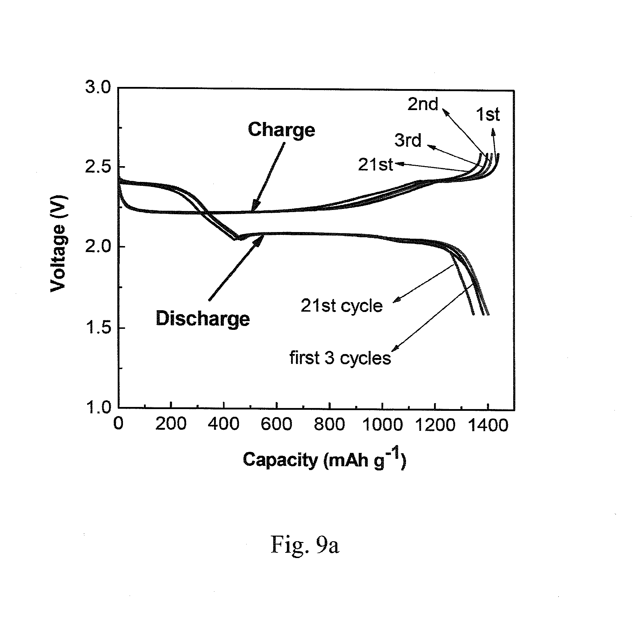

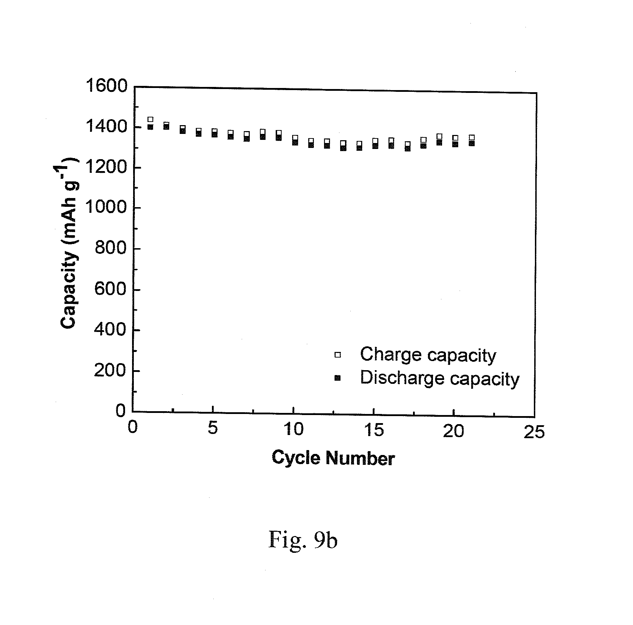

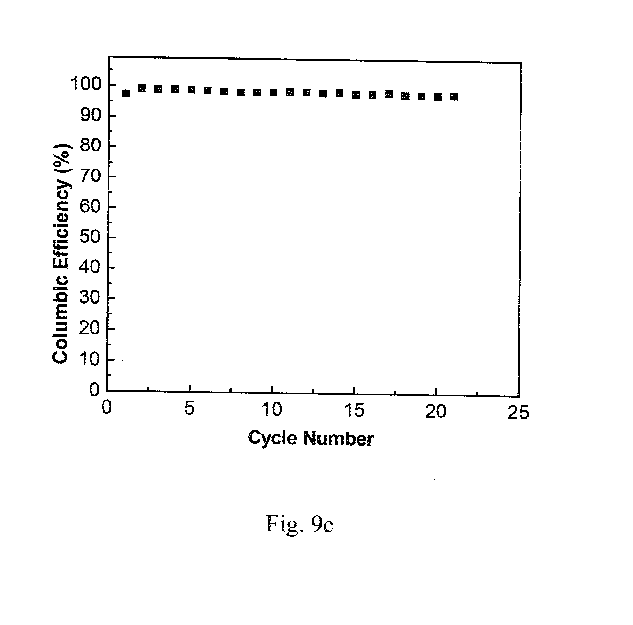

**Example** 2. In this example, a polysulfide electrolyte with a different concentration of $Li_2S_x$ described in Example 1 was prepared. $Li_2S$ (0.0187 g), S (0.1024 g), and $LiNO_3$ (0.138 g) was dissolved in DME (4 ml). The cathode and anode were as used in Example 1. The battery was subject to cycling at a test current of 160 mA/g, and a charge/discharge voltage window between 1.6 and 2.6 V. FIGs. 9A and 9B show the charge/discharge curves and capacity cycling stability, respectively, during 20 cycles of the lithium-sulfur battery. FIG. 9C shows the charge/discharge coulombic efficiency of the same coin cell. FIG. 9 illustrates the charge/discharge capacity of the battery was 1400 mAh/g and remained unchanged for the remained of cycling. The coulombic efficiency of the cell was about 98%.

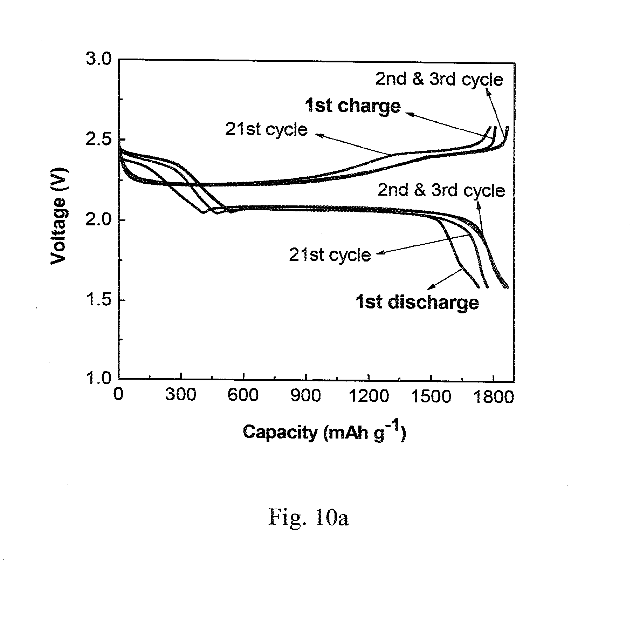

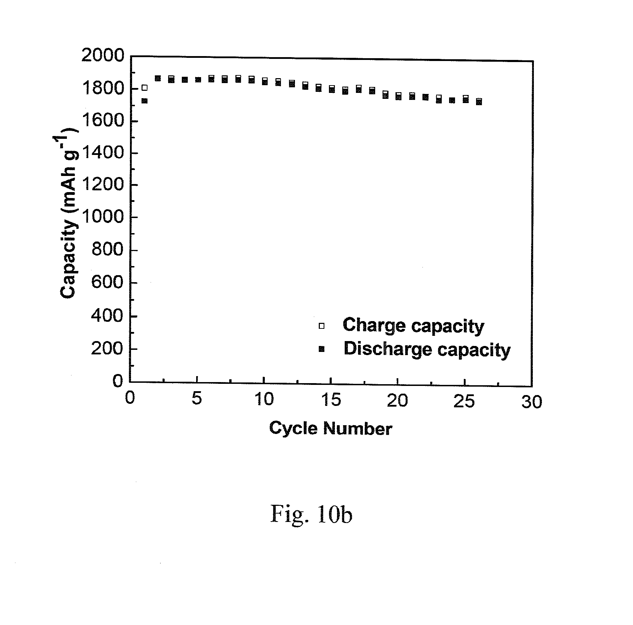

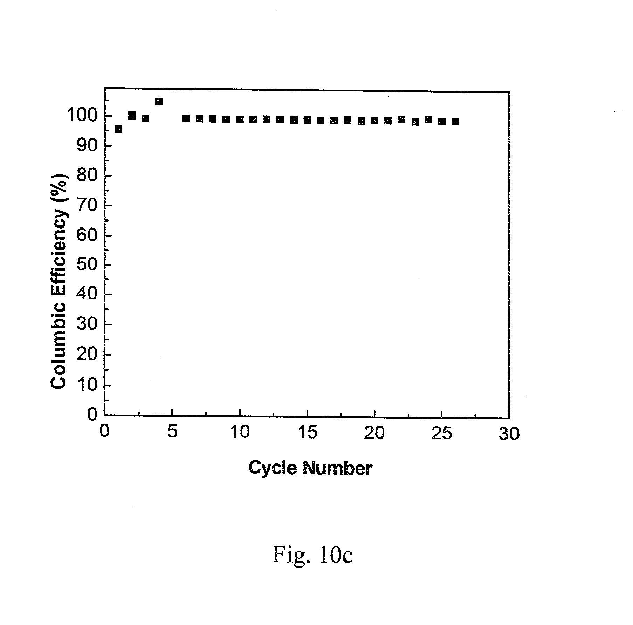

**Example** 3. $Li_2S$ (0.0373 g), S (0.2048 g), and $LiNO_3$ (0.278 g) was dissolved in DME (4 ml). The cathode and anode were as used in Example 1. The battery was subject to cycling at a test current of 160 mA/g, and a charge/discharge voltage window between 1.6 and 2.6 V. FIGs. 10A and 10B show the charge/discharge curves and capacity cycling stability, respectively, during 25 cycles of the lithium-sulfur battery. FIG. 10C shows the charge/discharge coulombic efficiency of the same coin cell. FIGs. 10A-10C illustrate that the charge/discharge capacity of the battery was 1850 mAh/g in the first cycle and then 1750 mAh/g after 25 cycles. The coulombic efficiency of the battery is shown in FIG. 10C as being nearly 100 %. It should be noted that the theoretical capacity of sulfur is 1675 mAh/g, and thus the capacity achieved in this cell was greater than the theoretical capacity. This is because the capacity of the cell was calculated based on the active material's weight in the cathode, i.e., the sulfur content in the cathode. However, because the polysulfide electrolyte used in the cell contained sulfur, it contributed to the overall capacity of the battery.

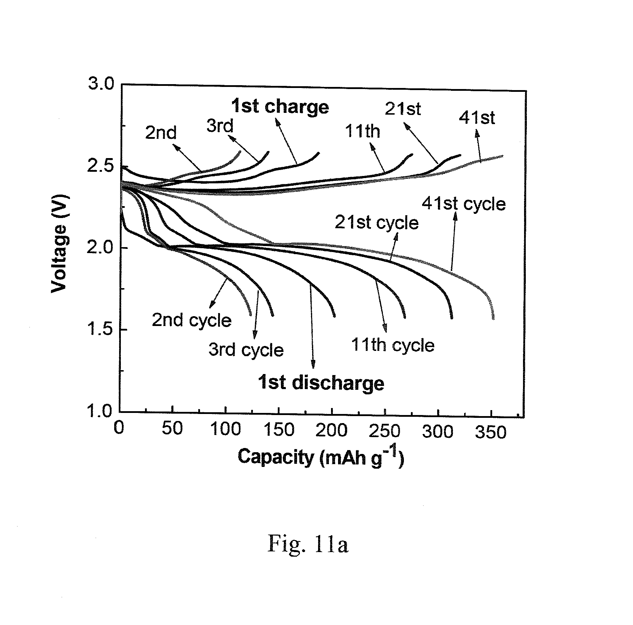

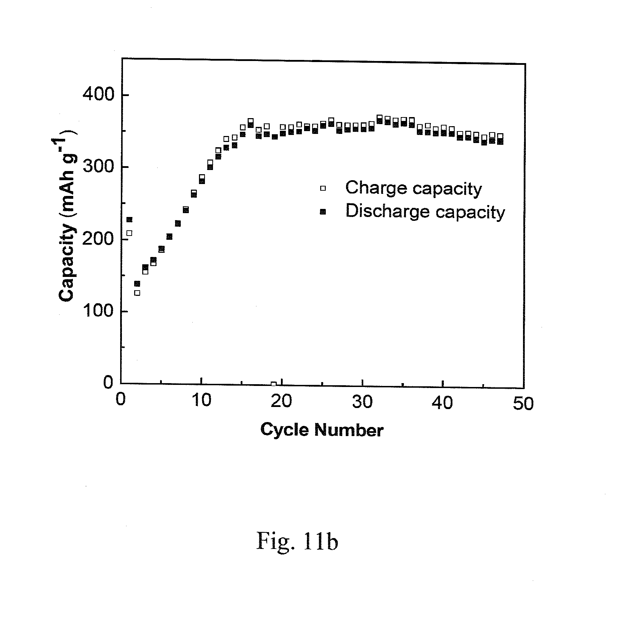

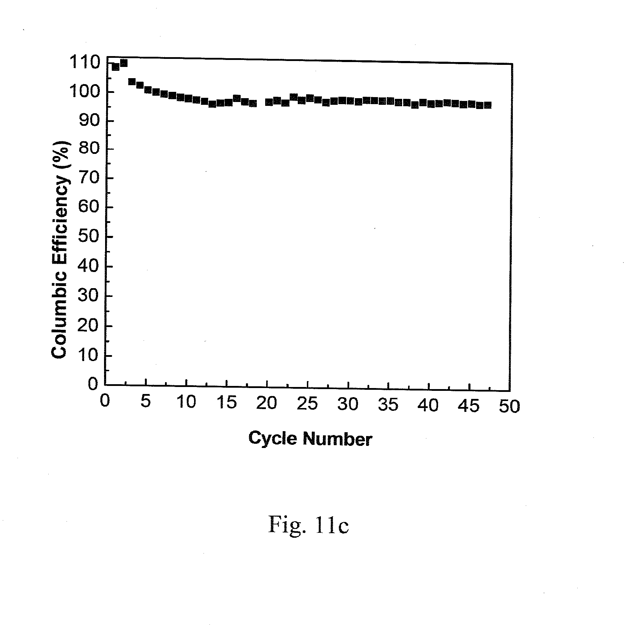

**Example** 4. In Example 3, the cell using polysulfide electrolyte demonstrated a capacity that is greater than the theoretical capacity of lithium-sulfur batteries, because the electrolyte also had an electrochemical capacity. In order to demonstrate the contribution of the lithium polysulfide electrolyte to the capacity of the battery, a coin cell in which the cathode did not contain any active material was prepared using an electrolyte of 0.2 M $Li_2S_9$ in DME with 0.5 M $LiNO_3$ (the total amount of sulfur was 1.152 mg). In the cell, the cathode was composed of only the carbon-coated current collector, and the anode was lithium metal. The test current was 160 mA/g, and the charge/discharge voltage window was between 1.6 and 2.6 V. FIGs. 11A and 11B show the charge/discharge curves and capacity cycling stability, respectively, during 50 cycles of the lithium-sulfur battery. FIG. 11C shows the charge/discharge coulombic efficiency of the same coin cell. The initial capacity of the cell was around 200 mAh/g based of the sulfur content in the electrolyte. The capacity decreased to around 120 mAh/g in the second cycle, but went up steadily in the following cycles. The capacity leveled at around 350 mAh/g after 20 cycles. The coulombic efficiency of the cell was over 98%.

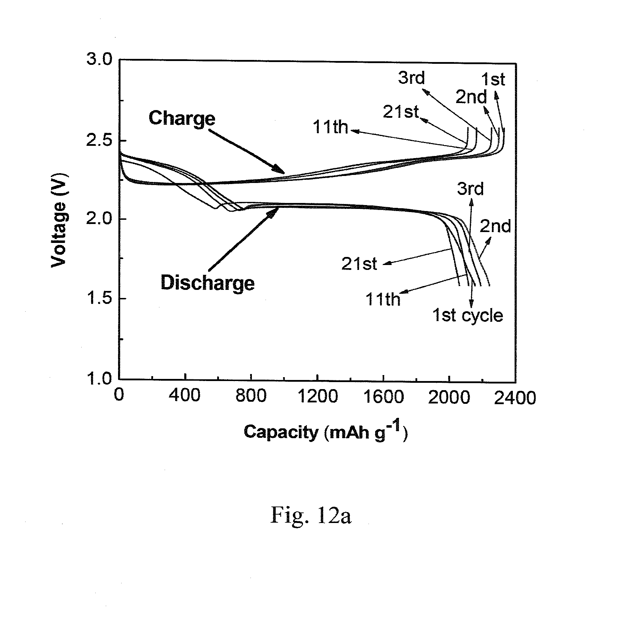

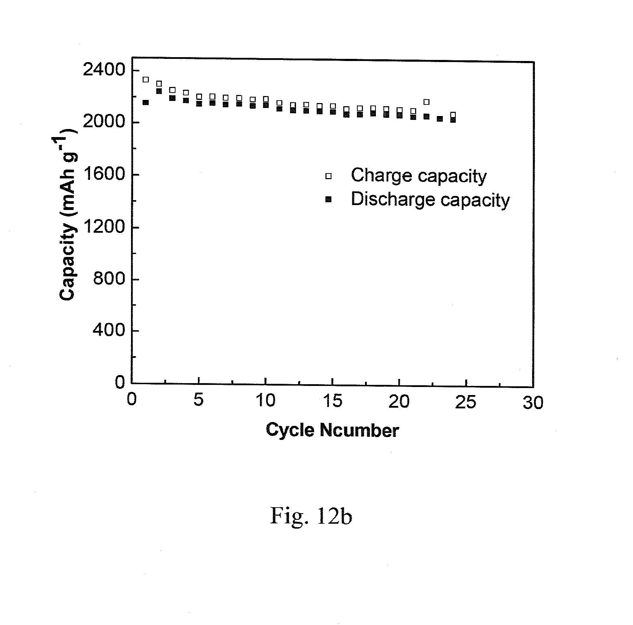

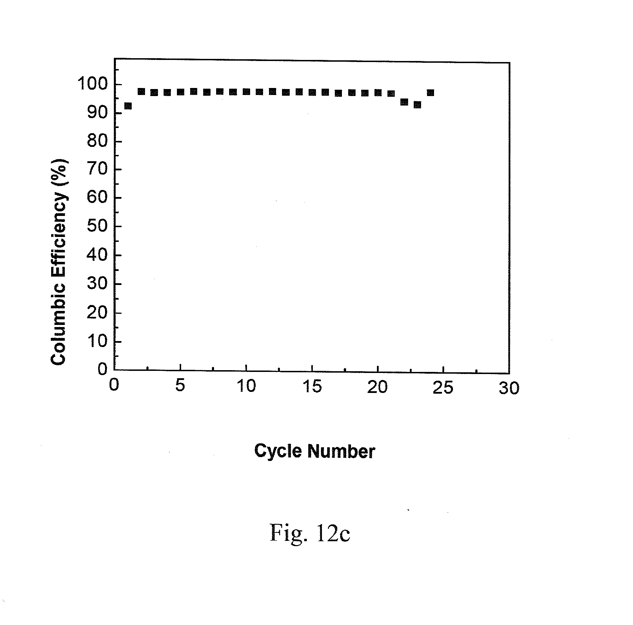

**Example** 5. In this example, an electrolyte of 0.5M $Li_2S_9$ and 0.5M of $LiNO_3$ in DME was prepared by dissolving $Li_2S$ (0.047 g), S (0.257 g) and $LiNO_3$ (0.069 g) were dissolved in DME (2 ml). A cell was prepared with the electrolyte and the cathode and anode used in Example 1. The battery was subject to cycling at a test current of 160 mA/g, and a charge/discharge voltage window between 1.6 and 2.6 V. FIGs. 12A and 12B show the charge/discharge curves and capacity cycling stability, respectively, during 25 cycles of the lithium-sulfur battery. FIG. 12C shows the charge/discharge coulombic efficiency of the same coin cell. FIGs. 12A-12C show that the charge/discharge capacity of the battery was around 2150 mAh/g in the first cycle and after 25 cycles the capacity remained constant at 2050 mAh/g. This even higher capacity compared to Example 4 was due to the higher capacity contribution from the electrolyte, as the electrolyte used in this example has a higher polysulfide concentration and thus a higher sulfur content. The coulombic efficiency of the cell was about 98%.

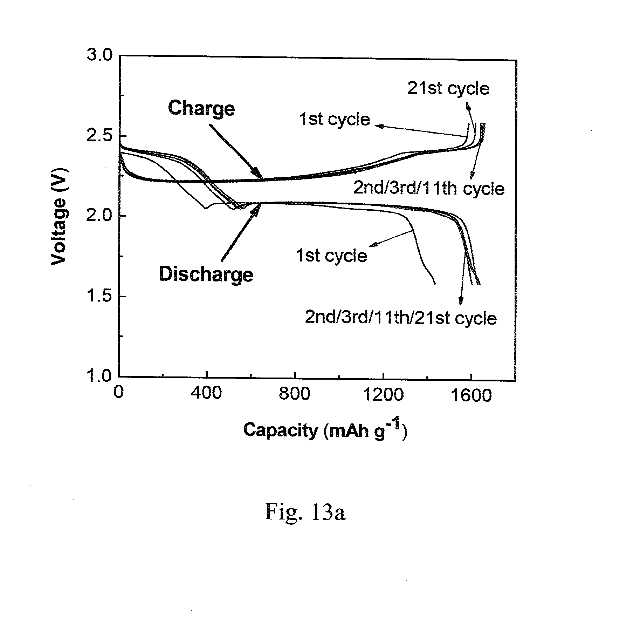

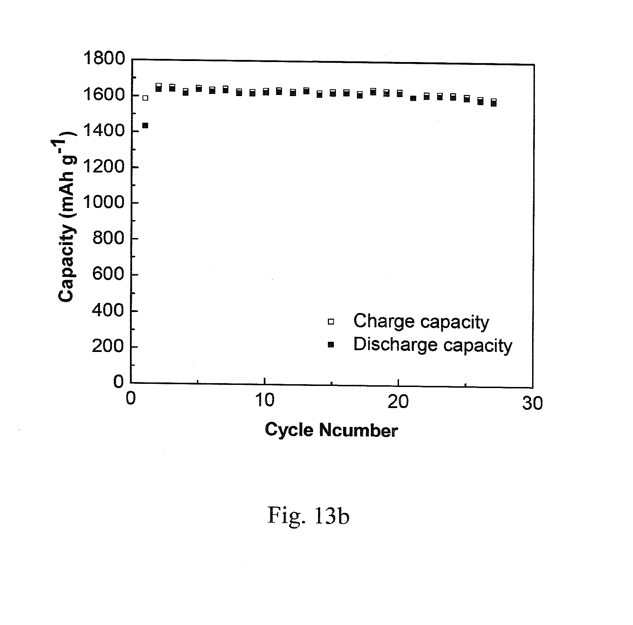

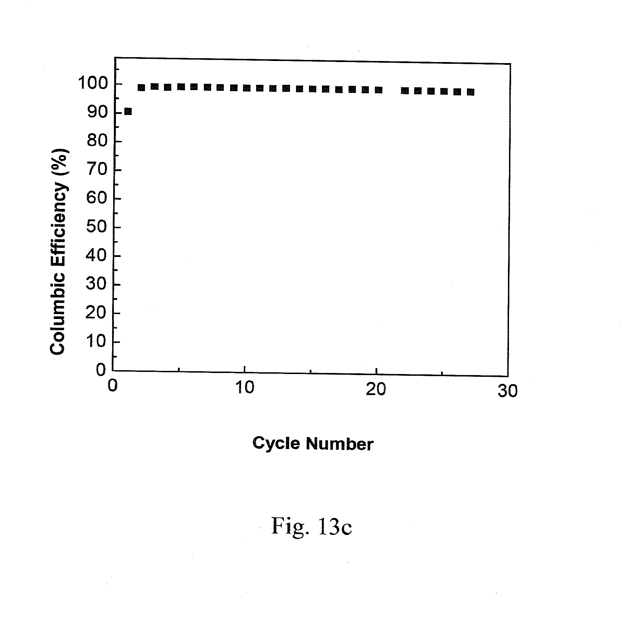

**Example** 6. In this example, a lower order of $Li_2S_x$, where x is 8, as compared to Example 1, was used in the electrolyte. The electrolyte was prepared by dissolving $Li_2S$ (0.0373 g), S (0.1792 g), and $LiNO_3$ (0.138 g) in DME (4 ml). A cell was prepared with the electrolyte and the cathode and anode used in Example 1. The battery was subject to cycling at a test current of 160 mA/g, and a charge/discharge voltage window between 1.6 and 2.6 V. FIGs. 13A and 13B show the charge/discharge curves and capacity cycling stability, respectively, during 30 cycles of the lithium-sulfur battery. FIG. 13C shows the charge/discharge coulombic efficiency of the same coin cell. FIGs. 13A-13C show that the initial discharge capacity of the battery was 1435 mAh/g, and went up to 1640 mAh/g in the second cycle, and then kept constant at 1580 mAh/g after 30 cycles. The coulombic efficiency of the cell was about 100%.

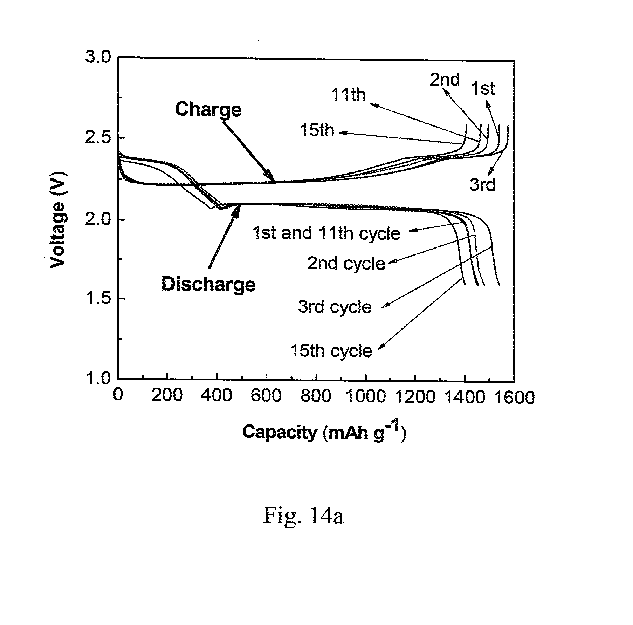

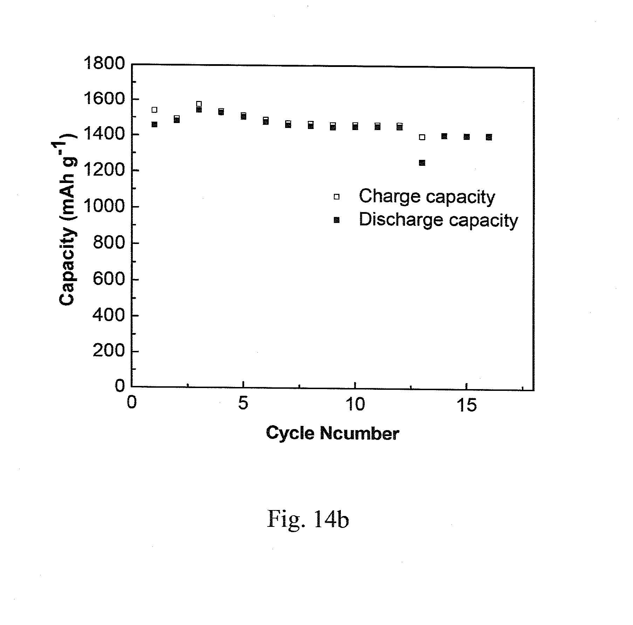

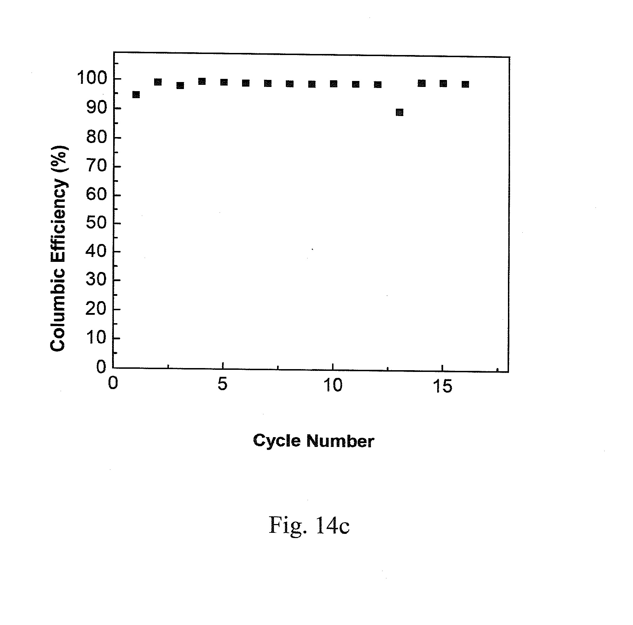

**Example** 7. In this example, a mixture of DME/DOL was used as the solvent in the electrolyte. $Li_2S$ (0.0373 g), S (0.2048 g), and $LiNO_3$ (0.138 g) was dissolved in DME/DOL (4 ml; 1:1 v/v). The cathode and anode were as used in Example 1. The battery was subject to cycling at a test current of 160 mA/g, and a charge/discharge voltage window between 1.6 and 2.6 V. FIGs. 14A and 14B show the charge/discharge curves and capacity cycling stability, respectively, during 17 cycles of the lithium-sulfur battery. FIG. 14C shows the charge/discharge coulombic efficiency of the same coin cell. FIGs. 14A-14C show that the discharge capacity of the cell was around 1460 mAh/g in the first cycle and then increased to 1540 mAh/g in the remainder of cycling. The coulombic efficiency of the cell was about 100%, except for the first cycle.

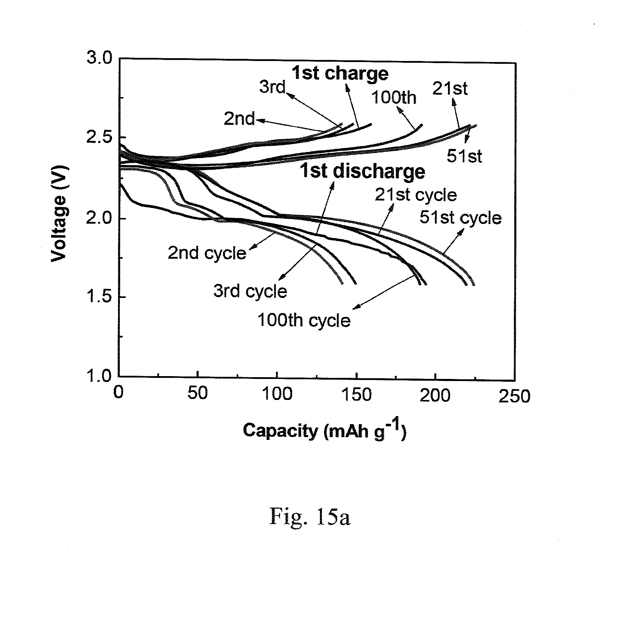

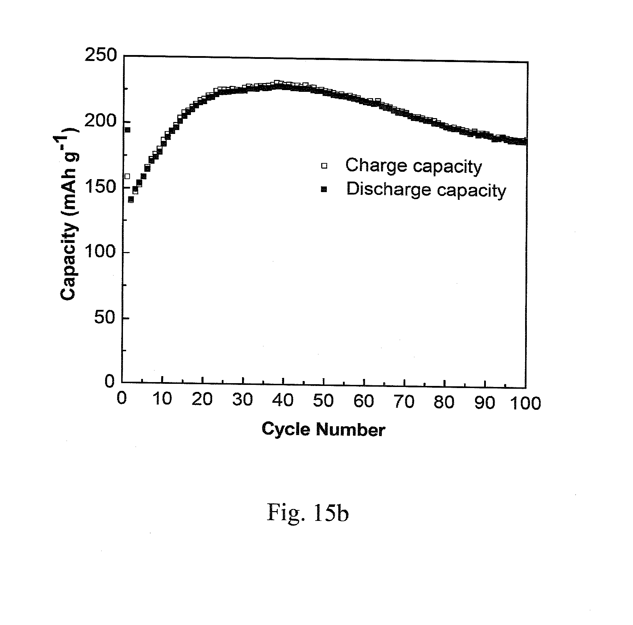

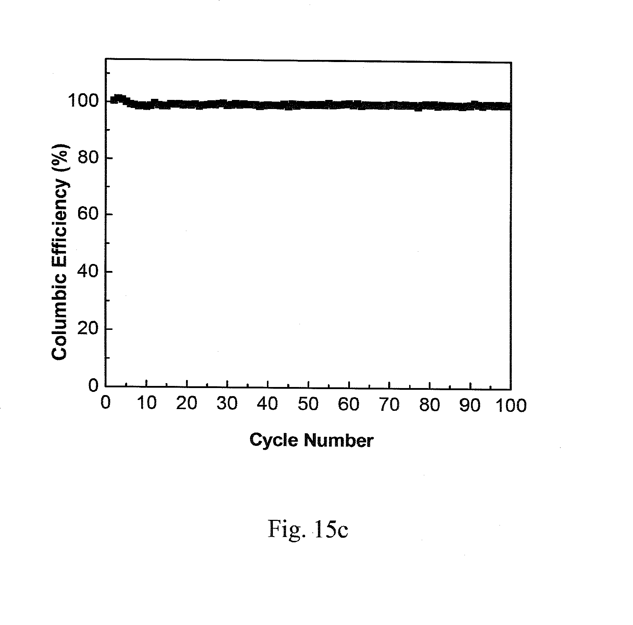

**Example** 8. In order to demonstrate the contribution to the battery capacity of the lithium polysulfide electrolyte which had DME/DOL as the solvent, a coin cell in which the cathode does not contain any active material was made in this example. An electrolyte was prepared 0.2M $Li_2S_9$ in DME:DOL=1:1 (v/v) solvents with 0.5M $LiNO_3$. The sulfur amount contained in the electrolyte was 1.152 mg. The cathode was composed of only the carbon-coated current collector, and the anode was lithium metal. The battery was subject to cycling at a test current of 160 mA/g, and a charge/discharge voltage window between 1.6 and 2.6 V. FIGs. 15A and 15B show the charge/discharge curves and capacity cycling stability, respectively, during 100 cycles of the lithium-sulfur battery. FIG. 15C shows the charge/discharge coulombic efficiency of the same coin cell. FIGs. 15A-15C show initial capacity of the cell was around 200 mAh/g. It decreased to around 140 mAh/g in the second cycle, and then increased steadily as the cell was cycled. The capacity of the cell reached 220 mAh/g at 30$^{th}$ cycle, and decreased to around 190 mAh/g after 100 cycles. The coulombic efficiency of the cell was nearly 100%.

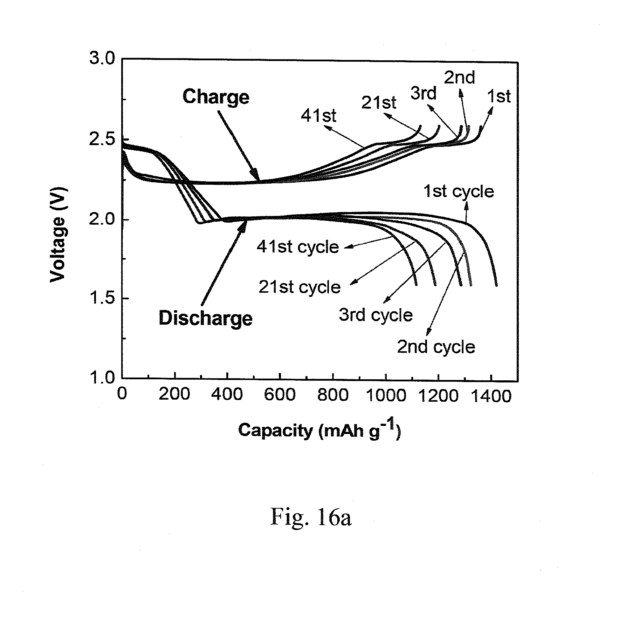

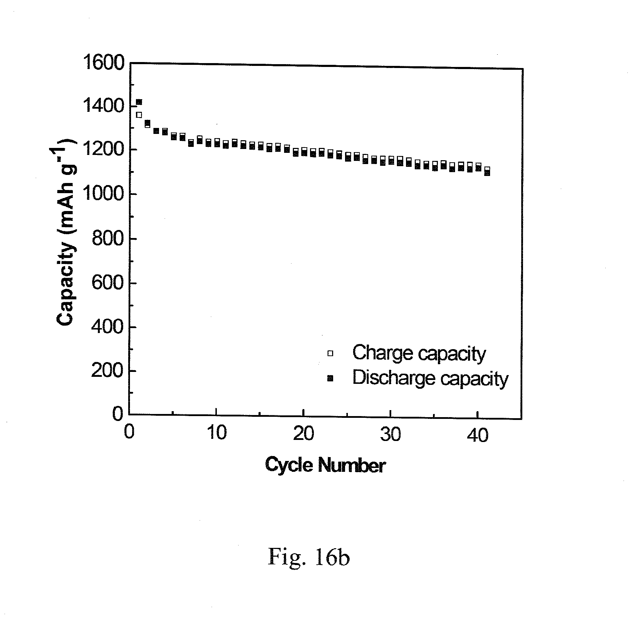

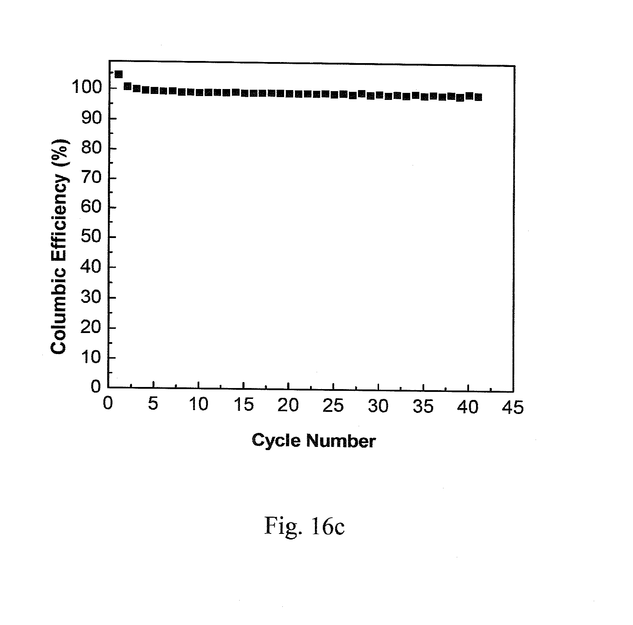

**Example 9**. Li$_2$S (0.0373g), S (0.2048 g), and LiNO$_3$ (0.138g) were dissolved in TEGDME (4 ml). The cathode and anode were as used in Example 1. The battery was subject to cycling at a test current of 160 mA/g, and a charge/discharge voltage window between 1.6 and 2.6 V. FIGs. 16A and 16B show the charge/discharge curves and capacity cycling stability, respectively, during 40 cycles of the lithium-sulfur battery. FIG. 16C shows the charge/discharge coulombic efficiency of the same coin cell. FIGs. 16A-16C show the discharge capacity of the battery was over 1400 mAh/g in the first cycle and then decreased to 1100 mAh/g after 40 cycles. The coulombic efficiency of the cell was about 99%.

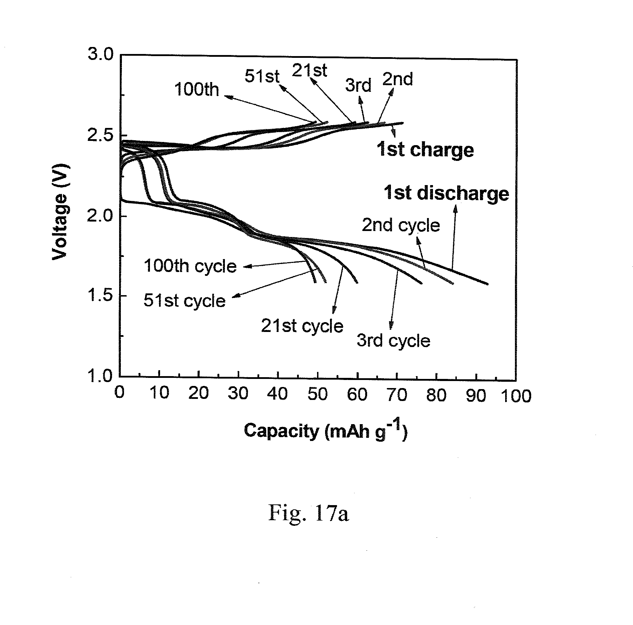

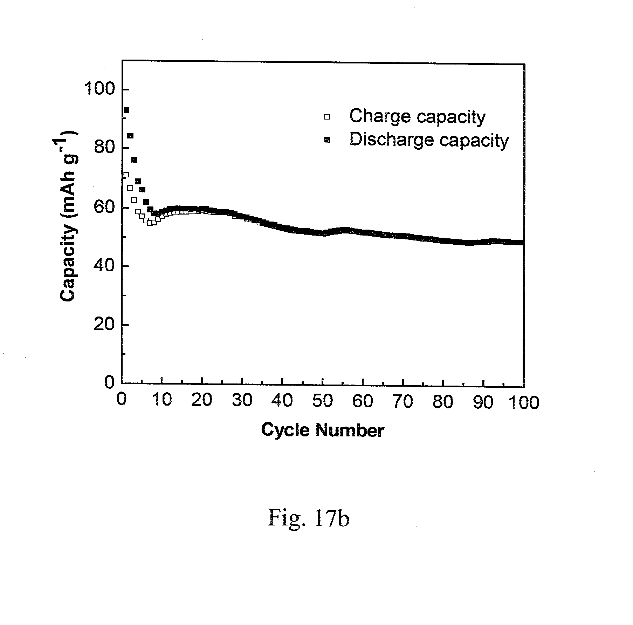

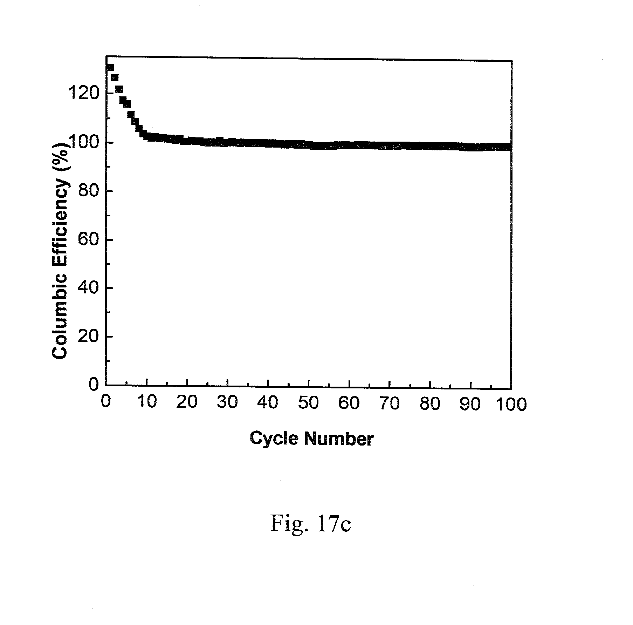

**Example 10**. In order to demonstrate the contribution to the battery capacity of the lithium polysulfide electrolyte which had TEGDME as the solvent, a coin cell in which the cathode did not contain any active material was made in this example. 0.02 ml electrolyte of 0.2M Li$_2$S$_9$ in DME:DOL=1:1 (v/v) solvent with 0.5M of LiNO$_3$ salt was put in the cell. The sulfur content contained in the electrolyte was 1.152 mg. The cathode was composed of only the carbon-coated current collector, and the anode was lithium metal. The test current was 160 mA/g, and the charge/discharge voltage window was between 1.6 and 2.6 V. FIGs. 17A and 17B show the charge/discharge curves and capacity cycling stability, respectively, during 100 cycles of the lithium-sulfur battery. FIG. 17C shows the charge/discharge coulombic efficiency of the same coin cell. The initial capacity of the cell was about 90 mAh/g. It went down quickly to about 60 mAh/g in the next several cycles and then remained unchanged. The coulombic efficiency of the cell was 100%.

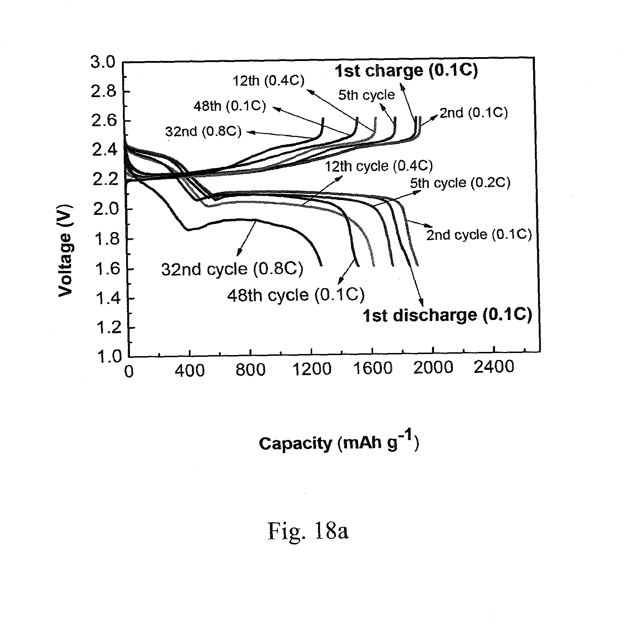

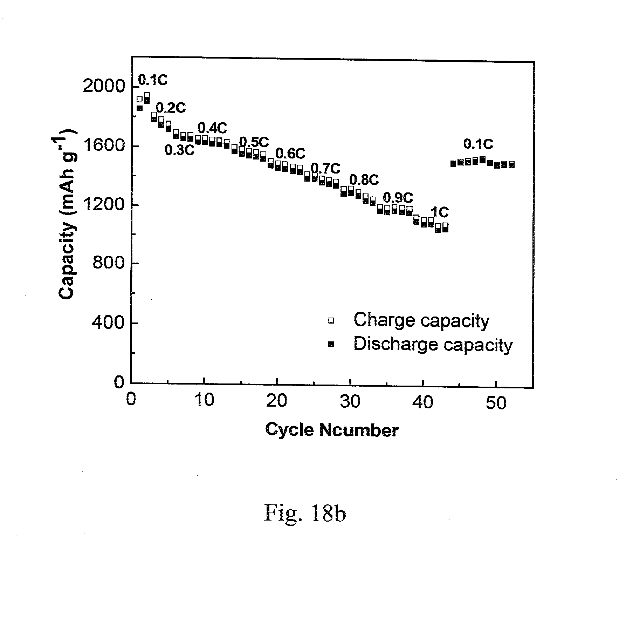

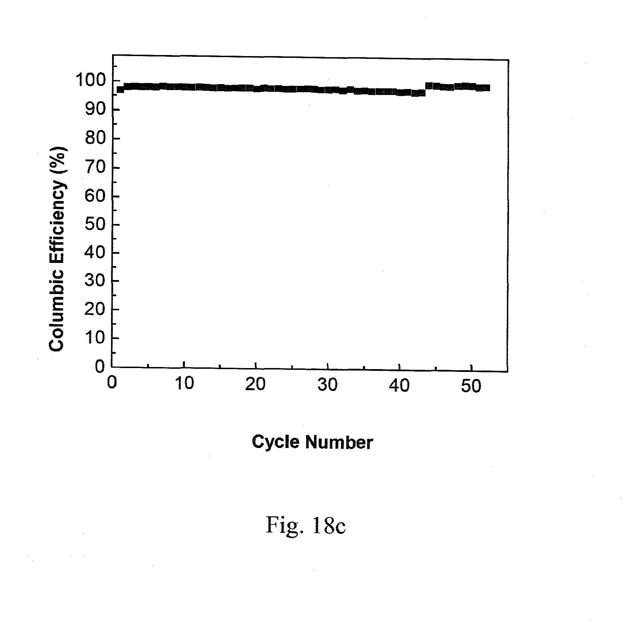

**Example 11**. In this example, a coin cell was made in which the cathode comprised super-P carbon as the conductor instead of acetylene black. 4 ml electrolyte of 0.2M Li$_2$S$_9$ in DME solvent with 0.5M of LiNO$_3$ salt was used as the electrolyte. The cathode was composed of sulfur/super P/PVDF=60/30/10, and the anode was lithium metal. The cell was tested under different discharge rates from 0.1C to 1C and then back to 0.1C. The charge/discharge voltage window was between 1.6 and 2.6 V. FIGs. 18A and 18B show the charge/discharge curves and capacity cycling stability, respectively, during 50 cycles of the lithium-sulfur battery. FIG. 18C shows the charge/discharge coulombic efficiency of the same coin cell. The discharge capacity of the battery was over 1900 mAh/g at the 0.1C rate, and reached 1050 mAh/g when discharge at the 1C rate. After 44 cycles under increasing rates, the cell exhibited a discharge capacity of 1500 mAh/g when the rate was put back to the 0.1C rate. The coulombic efficiency of the cell was about 98%.

According to one aspect of the present invention there is provided an electrolyte comprising:

> a lithium polysulfide of formula Li$_2$S$_x$, where x > 2;
> a shuttle inhibitor; and
> a non-aqueous solvent;

wherein a concentration of the lithium polysulfide in the electrolyte is from about 0.01 M to about 3 M.

The non-aqueous solvent may comprise acetal, ketal, sulfone, acyclic ether, cyclic ether, glyme, polyether, or dioxolane.

The non-aqueous solvent may comprise 1,2-dimethoxy ethane, 1,3-dioxolane, tetraethyleneglycol dimethyl ether, tetrahydrofuran, or tri(ethylene glycol)dimethyl ether.

The non-aqueous solvent may comprise a mixture of any two or more solvents selected from the group consisting of: 1,2-dimethoxy ethane, 1,3-dioxolane, tetraethyleneglycol dimethyl ether, tetrahydrofuran, and tri(ethylene glycol) dimethyl ether.

The non-aqueous solvent may comprise a mixture of any two solvents selected from the group consisting of: 1,2-dimethoxy ethane, 1,3-dioxolane, tetraethyleneglycol dimethyl ether, tetrahydrofuran, and tri(ethylene glycol)dimethyl ether; in a v/v ratio of from 5:95 to 95:5; suitably about 1:1.

The non-aqueous solvent may comprise 1,2-dimethoxy ethane and 1,3-dioxolane, 1,2-dimethoxy ethane and tetraethyleneglycol dimethyl ether, or 1,2-dimethoxy ethane and tri(ethylene glycol)dimethyl ether.

The non-aqueous solvent may comprise 1,2-dimethoxy ethane and 1,3-dioxolane in a v/v ratio of 1:1; or tetraethyleneglycol dimethyl ether.

As noted above, the lithium polysulfide is of formula Li$_2$S$_x$, where x > 2. Generally x is from 3 to 20, typically x is 8 or 9.

According to one embodiment, the shuttle inhibitor comprises lithium nitrate, lithium nitrite, potassium nitrate, potassium nitrite, cesium nitrate, cesium nitrite, barium nitrate, barium nitrite, ammonium nitrate, ammonium nitrite, dialkyl imidazolium nitrates, guanidine nitrate, ethyl nitrite, propyl nitrite, butyl nitrite, pentyl nitrite octyl nitrite, nitromethane, nitropropane, nitrobutanes, nitrobenzene, dinitrobenzene, nitrotoluene, dinitrotoluene, nitropyridine, dinitropyridine, pyridine N-oxide, alkylpyridine N-oxides, or tetramethyl piperidine N-oxyl (TEMPO)

Suitably the shuttle inhibitor comprises LiNO$_3$ or LiClO$_4$.

The concentration of the lithium polysulfide in the electrolyte may be from about 0.1 M to about 0.3M.

According to one embodiment, the electrolyte is subject to the proviso that the electrolyte has not been subjected to a charging or discharging current.

Suitably, the electrolyte is as described herein, wherein:

x is from 3 to 15;
the shuttle inhibitor comprises $LiNO_3$ or $LiClO_4$; and the non-aqueous solvent comprises 1,2-dimethoxy ethane, 1,3-dioxolane, tetraethyleneglycol dimethyl ether, tetrahydrofuran, or tri(ethylene glycol)dimethyl ether.

There is also provided a lithium-sulfur battery comprising:

a sulfur cathode;
a lithium metal anode; and
an electrolyte comprising:

a lithium polysulfide of formula $Li_2S_x$, wherein x > 2;
a shuttle inhibitor; and
a non-aqueous solvent.

Typically the battery is uncharged.

Suitably the lithium-sulfur battery comprises the non-aqueous solvent including 1,2-dimethoxy ethane, 1,3-dioxolane, tetraethyleneglycol dimethyl ether, tetrahydrofuran, or tri(ethylene glycol)dimethyl ether.

Typically the lithium-sulfur battery comprises the non-aqueous solvent including 1,2-dimethoxy ethane and 1,3-dioxolane in a v/v ratio of 1:1; or tetraethyleneglycol dimethyl ether.

Suitably the shuttle inhibitor comprises $LiNO_3$ or $LiClO_4$.

The lithium-sulfur battery may further comprise a separator between the anode and the cathode, wherein the separator may comprise a porous, non-conductive or insulative material.

According to a further aspect of the present invention there is provided a process for preparing an electrolyte, the process comprising:

contacting $Li_2S$, Li, or a mixture of $Li_2S$ and Li with S in a non-aqueous solvent to form a suspension;
heating the suspension to a temperature and for a time sufficient to dissolve the $Li_2S$, Li, or a mixture of $Li_2S$ and Li and S in the solvent to form a lithium polysulfide solution;
cooling the lithium polysulfide solution; and
adding a shuttle inhibitor to the lithium polysulfide solution.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting essentially of" will be understood to include those elements specifically recited and those additional elements that do not materially affect the basic and novel characteristics of the claimed technology. The phrase "consisting of" excludes any element not specified.

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (*e.g.*, "such as") provided herein, is intended merely to better illuminate the embodiments and does not pose a limitation on the scope of the claims unless otherwise stated. No language in the specification should be construed as indicating any non-claimed element as essential.

The present disclosure is not to be limited in terms of the particular embodiments described in this application.

Many modifications and variations can be made without departing from its spirit and scope, as will be apparent to those skilled in the art. Functionally equivalent methods and compositions within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds compositions or biological systems, which can of course vary. It is also to be understood that the terminology used herein is for the purpose of describing particular embodiments only, and is not intended to be limiting.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, *etc*. As a non-limiting example, each range discussed herein can be readily broken down into a lower third, middle third and upper third, *etc.* As will also be understood by one skilled in the art all language such as "up to," "at least," "greater than," "less than," and the like, include the number recited and refer to ranges which can be subsequently broken down into subranges as discussed above. Finally, as will be understood by one skilled in the art, a range includes each individual member.

All publications, patent applications, issued patents, and other documents referred to in this specification are herein incorporated by reference as if each individual publication, patent application, issued patent, or other document was specifically and individually indicated to be incorporated by reference in its entirety. Definitions that are contained in text incorporated by reference are excluded to the extent that they contradict definitions in this disclosure.

While certain embodiments have been illustrated and described, it should be understood that changes and modifications can be made therein in accordance with ordinary skill in the art without departing from the technology in its broader aspects as defined in the following claims.

## Claims

1. An electrolyte comprising:

    a lithium polysulfide of formula $Li_2S_x$, where $x > 2$;
    a shuttle inhibitor; and
    a non-aqueous solvent;

    wherein a concentration of the lithium polysulfide in the electrolyte is from about 0.01 M to about 3 M.

2. The electrolyte of Claim 1, wherein the non-aqueous solvent comprises a acetal, ketal, sulfone, acyclic ether, cyclic ether, glyme, polyether, or dioxolane.

3. The electrolyte of Claim 1, wherein the non-aqueous solvent comprises 1,2-dimethoxy ethane, 1,3-dioxolane, tetraethyleneglycol dimethyl ether, tetrahydrofuran, or tri(ethylene glycol)dimethyl ether.

4. The electrolyte of Claim 1, wherein the non-aqueous solvent comprises a mixture of any two or more solvents selected from the group consisting of: 1,2-dimethoxy ethane, 1,3-dioxolane, tetraethyleneglycol dimethyl ether, tetrahydrofuran, and tri(ethylene glycol)dimethyl ether.

5. The electrolyte of Claim 1, wherein x is from 3 to 20.

6. The electrolyte of Claim 1, wherein x is 8 or 9.

7. The electrolyte of Claim 1, wherein the shuttle inhibitor comprises lithium nitrate, lithium nitrite, potassium nitrate, potassium nitrite, cesium nitrate, cesium nitrite, barium nitrate, barium nitrite, ammonium nitrate, ammonium nitrite, dialkyl imidazolium nitrates, guanidine nitrate, ethyl nitrite, propyl nitrite, butyl nitrite, pentyl nitrite octyl nitrite, nitromethane, nitropropane, nitrobutanes, nitrobenzene, dinitrobenzene, nitrotoluene, dinitrotoluene, nitropyridine, dinitropyridine, pyridine N-oxide, alkylpyridine N-oxides, or tetramethyl piperidine N-oxyl (TEMPO)

**8.** The electrolyte of Claim 1, wherein the shuttle inhibitor comprises $LiNO_3$ or $LiClO_4$.

**9.** The electrolyte of Claim 1, wherein the concentration of the lithium polysulfide in the electrolyte is from about 0.1 M to about 0.3 M.

**10.** The electrolyte of Claim 1, subject to the proviso that the electrolyte has not been subjected to a charging or discharging current.

**11.** The electrolyte of Claim 1, wherein:

x is from 3 to 15;
the shuttle inhibitor comprises $LiNO_3$ or $LiClO_4$; and
the non-aqueous solvent comprises 1,2-dimethoxy ethane, 1,3-dioxolane,
tetraethyleneglycol dimethyl ether, tetrahydrofuran, or tri(ethylene glycol)dimethyl ether.

**12.** A lithium-sulfur battery comprising:

a sulfur cathode;
a lithium metal anode; and
an electrolyte comprising:

a lithium polysulfide of formula $Li_2S_x$, wherein x > 2;
a shuttle inhibitor; and
a non-aqueous solvent.

**13.** The lithium-sulfur battery of Claim 12, wherein the battery is uncharged.

**14.** The lithium-sulfur battery of Claim 12, wherein the non-aqueous solvent comprises 1,2-dimethoxy ethane, 1,3-dioxolane, tetraethyleneglycol dimethyl ether, tetrahydrofuran, or tri(ethylene glycol)dimethyl ether.

**15.** A process for preparing an electrolyte, the process comprising:

contacting $Li_2S$, Li, or a mixture of $Li_2S$ and Li with S in a non-aqueous solvent to
form a suspension;
heating the suspension to a temperature and for a time sufficient to dissolve the
$Li_2S$, Li, or a mixture of $Li_2S$ and Li and S in the solvent to form a lithium polysulfide solution;
cooling the lithium polysulfide solution; and
adding a shuttle inhibitor to the lithium polysulfide solution.

Fig. 1a

Fig. 1b

Fig. 1c

Fig. 1d

Fig. 1e

Fig. 1f

Fig. 1g

Fig. 1h

Fig. 1i

Fig. 2a

Fig. 2b

Fig. 2c

Fig. 3a

Fig. 3b

Fig. 3c

Fig. 4a

Fig. 4b

Fig. 5a

Fig. 5b

Fig. 5c

Fig. 5d

Fig. 6a

Fig. 6b

Fig. 7

Fig. 8a

Fig. 8b

Fig. 8c

Fig. 9a

Fig. 9b

Fig. 9c

Fig. 10a

Fig. 10b

Fig. 10c

Fig. 11a

Fig. 11b

Fig. 11c

Fig. 12a

Fig. 12b

Fig. 12c

Fig. 13a

Fig. 13b

Fig. 13c

Fig. 14a

Fig. 14b

Fig. 14c

Fig. 15a

Fig. 15b

Fig. 15c

Fig. 16a

Fig. 16b

Fig. 16c

Fig. 17a

Fig. 17b

Fig. 17c

Fig. 18a

Fig. 18b

Fig. 18c

Europäisches
Patentamt

European
Patent Office

Office européen
des brevets

# EUROPEAN SEARCH REPORT

Application Number

EP 13 17 5386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHENG S ZHANG: "Role of LiNOin rechargeable lithium/sulfur battery", ELECTROCHIMICA ACTA, ELSEVIER SCIENCE PUBLISHERS, BARKING, GB, vol. 70, 19 March 2012 (2012-03-19), pages 344-348, XP028420153, ISSN: 0013-4686, DOI: 10.1016/J.ELECTACTA.2012.03.081 [retrieved on 2012-03-27] * page 344 - page 348; table 1 * | 1-15 | INV. H01M4/38 H01M4/58 H01M10/052 H01M10/0567 H01M10/0568 H01M10/0569 |
| X | SHENG S ZHANG ET AL: "A new direction for the performance improvement of rechargeable lithium/sulfur batteries", JOURNAL OF POWER SOURCES, ELSEVIER SA, CH, vol. 200, 19 October 2011 (2011-10-19), pages 77-82, XP028125900, ISSN: 0378-7753, DOI: 10.1016/J.JPOWSOUR.2011.10.076 [retrieved on 2011-10-25] * page 77 - page 82 * | 1-3,5-15 | |
| X | PELED E ET AL: "LITHIUM-SULFUR BATTERY: EVALUATION OF DIOXOLANE-BASED ELECTROLYTES", JOURNAL OF THE ELECTROCHEMICAL SOCIETY, ELECTROCHEMICAL SOCIETY, MANCHESTER, NEW HAMPSHIRE; US, vol. 136, no. 6, 1 June 1989 (1989-06-01), pages 1621-1625, XP000159887, ISSN: 0013-4651 * page 1621 - page 1624 * | 1-6,8-15 | TECHNICAL FIELDS SEARCHED (IPC) H01M |
| X Y | US 2008/038645 A1 (KOLOSNITSYN VLADIMIR [RU] ET AL) 14 February 2008 (2008-02-14) * paragraphs [0007] - [0009], [0014] - [0055]; example 2 * | 1-6, 8-11,15 7 | |

-/--

The present search report has been drawn up for all claims

| Place of search | Date of completion of the search | Examiner |
|---|---|---|
| The Hague | 16 October 2013 | Panitz, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**Europäisches Patentamt**
**European Patent Office**
**Office européen des brevets**

# EUROPEAN SEARCH REPORT

Application Number

EP 13 17 5386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/156575 A1 (MIKHAYLIK YURIY V [US]) 21 July 2005 (2005-07-21) * paragraphs [0041] - [067,]; examples 1-19 * | 7 | |
| T | HYUNG SUN KIM ET AL: "Shuttle inhibitor effect of lithium perchlorate as an electrolyte salt for lithiumâ sulfur batteries", JOURNAL OF APPLIED ELECTROCHEMISTRY, KLUWER ACADEMIC PUBLISHERS, DO, vol. 42, no. 2, 11 December 2011 (2011-12-11), pages 75-79, XP035006514, ISSN: 1572-8838, DOI: 10.1007/S10800-011-0373-1 * the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 16 October 2013 | Panitz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 17 5386

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2013

| Patent document cited in search report | Publication date | Patent family member(s) | | Publication date |
|---|---|---|---|---|
| US 2008038645 A1 | 14-02-2008 | CN | 101501897 A | 05-08-2009 |
| | | EP | 2050154 A1 | 22-04-2009 |
| | | GB | 2440823 A | 13-02-2008 |
| | | JP | 2010500709 A | 07-01-2010 |
| | | KR | 20090037932 A | 16-04-2009 |
| | | US | 2008038645 A1 | 14-02-2008 |
| | | US | 2011008683 A1 | 13-01-2011 |
| | | WO | 2008017888 A1 | 14-02-2008 |
| US 2005156575 A1 | 21-07-2005 | AT | 543228 T | 15-02-2012 |
| | | CA | 2552645 A1 | 28-07-2005 |
| | | CN | 1930711 A | 14-03-2007 |
| | | CN | 101656334 A | 24-02-2010 |
| | | CN | 102969542 A | 13-03-2013 |
| | | EP | 1714339 A2 | 25-10-2006 |
| | | EP | 2333886 A1 | 15-06-2011 |
| | | JP | 5160093 B2 | 13-03-2013 |
| | | JP | 2007518231 A | 05-07-2007 |
| | | KR | 20060127973 A | 13-12-2006 |
| | | US | 2005156575 A1 | 21-07-2005 |
| | | WO | 2005069405 A2 | 28-07-2005 |

EPO FORM P0459

For more details about this annex : see Official Journal of the European Patent Office, No. 12/82

**EP 2 688 126 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6153337 A